# EUROPEAN PATENT SPECIFICATION

(11) **EP 4 343 549 B1**
(45) Date of publication and mention of the grant of the patent: **17.06.2026**
(21) Application number: 22831843.2
(22) Date of filing: 23.06.2022
(51) Int. Cl.: G06F 21/74, G06F 9/48, G06F 9/54

(54) **USER MODE INTERRUPT REQUEST PROCESSING METHOD AND APPARATUS**
VERFAHREN UND VORRICHTUNG ZUR VERARBEITUNG VON BENUTZERMODUSUNTERBRECHUNGSANFRAGEN
PROCÉDÉ ET APPAREIL DE TRAITEMENT DE DEMANDE D'INTERRUPTION EN MODE UTILISATEUR

(30) Priority: 28.06.2021 CN 202110716473
(43) Date of publication of application: 27.03.2024
(73) Proprietor: Huawei Technologies Co., Ltd., Shenzhen, Guangdong 518129 (CN)
(72) Inventor: WU, Yuming, Shenzhen, Guangdong 518129 (CN); CAO, Shen, Shenzhen, Guangdong 518129 (CN); LIU, Yutao, Shenzhen, Guangdong 518129 (CN)
(74) Representative: MERH-IP Matias Erny Reichl Hoffmann Patentanwälte PartG mbB
(86) International application number: PCT/CN2022/100786
(87) International publication number: WO 2023/274027

(56) References cited:
- EP-A1- 2 575 040
- CN-A- 107 003 899
- CN-A- 110 955 598
- CN-A- 113 010 275
- US-A1- 2006 117 325
- US-A1- 2014 196 059

## Description

### TECHNICAL FIELD

This application relates to the field of communication technologies, and in particular, to a user-mode interrupt request processing method and apparatus.

### BACKGROUND

A central processing unit (CPU) has two running status levels: a kernel mode and a user mode. A program may run at the two running status levels, and an execution level of the kernel mode is higher than that of the user mode. Currently, qualities of a large quantity of third-party driver codes vary. When driver codes run in a kernel mode, if an error occurs in the third-party driver code, security of running of a kernel code is affected. To improve system security, setting a third-party driver to the user mode becomes a trend in the future, that is, the third-party driver is isolated from the kernel mode. A modern microkernel has adopted a user-mode-driven architecture. For example, both a Fuchsia operating system and a seL4 operating system use a similar design.

Running of the driver is inseparable from interrupt processing. A user-mode driver needs user-mode interruption. Therefore, a processing delay of a user-mode interruption request greatly affects the user-mode driver and directly affects product competitiveness. For example, assurance of performance such as inputting, outputting, and screen touching of a peripheral device, and packet receiving and sending of a network depends on a low latency of interrupt processing. Therefore, how to reduce the delay of user-mode interrupt processing is an urgent problem to be resolved

US2006/117325 A1 discloses a system that facilitates processing device interrupts (including level-triggered interrupts) in a user-mode process.

US2014/196059 A1 discloses a method of enforcing limitations on hardware drivers in computing environment, the method involves assigning subset of I/O resources to device bus including limiting device bus to only be able to assign I/O resources that are assigned by root bus.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provides a user-mode interrupt request processing method and apparatus, to effectively reduce a delay of user-mode interrupt processing, thereby ensuring performance of a user-mode driver.

According to a first aspect, a user-mode interrupt request processing method is provided. A central processing unit CPU is used as an example. The method includes: The central processing unit CPU in a kernel mode performs anonymization processing on a kernel address of a first interrupt exception handler to obtain a second interrupt exception handler; the CPU in the kernel mode obtains a user-mode interrupt request, and executes the second interrupt exception handler to determine a user-mode interrupt handler corresponding to the user-mode interrupt request; the CPU switches to a user mode from the kernel mode through first privilege level switching, where the first privilege level switching is switching without context recovery; wherein the first privilege level switching comprises configuring a stack pointer, SP, to point to a user stack, and configuring a program counter, PC, to point to an address of the user mode; the CPU in the user mode executes the user-mode interrupt handler; and the CPU switches to the kernel mode from the user mode through second privilege level switching, where the second privilege level switching is switching without context storage.

In the technical solution of this application, privilege level switching without context recovery and storage can greatly reduce a delay of user-mode interrupt processing, and the second interrupt exception handler without sensitive information such as the kernel address can ensure security of a system kernel while reducing the delay of user-mode interrupt processing.

With reference to the first aspect, in some implementations of the first aspect, that the CPU in a kernel mode performs anonymization processing on a kernel address of a first interrupt exception handler includes: overwriting or deleting the kernel address and information in the kernel address in the first interrupt exception handler.

With reference to the first aspect, in some implementations of the first aspect, the executing the second interrupt exception handler to determine a user-mode interrupt handler corresponding to the user-mode interrupt request includes: waking up a user-mode interrupt processing thread corresponding to the user-mode interrupt request, where the user-mode interrupt processing thread includes the user-mode interrupt handler; or obtaining an address of the user-mode interrupt handler corresponding to the user-mode interrupt request.

With reference to the first aspect, in some implementations of the first aspect, the obtaining an address of the user-mode interrupt handler corresponding to the user-mode interrupt request includes: obtaining an interrupt number corresponding to the user-mode interrupt request; and obtaining an address of the user-mode interrupt handler corresponding to the interrupt number.

In the technical solution of this application, for a single-thread or single-process application scenario, the address of the user-mode interrupt handler corresponding to the interrupt number may be directly obtained, thereby further shortening time for the CPU to run the second interrupt exception handler in the kernel mode, improving a response speed of the user-mode interrupt handler, and reducing a delay of user-mode interrupt processing.

With reference to the first aspect, in some implementations of the first aspect, the obtaining an interrupt number corresponding to the user-mode interrupt request includes: The CPU in the kernel mode reads a register of an interrupt controller to obtain the interrupt number corresponding to the user-mode interrupt request, where the interrupt controller obtains an acknowledgement message, and the acknowledgement message indicates the interrupt controller to mask an interrupt request whose priority is the same as that of the user-mode interrupt request, or mask an interrupt request whose priority is lower than that of the user-mode interrupt request.

With reference to the first aspect, in some implementations of the first aspect, the method further includes: The CPU in the kernel mode sets an interrupt priority group for the interrupt controller, where the interrupt priority group includes a first interrupt priority group and a second interrupt priority group, the first interrupt priority group includes a kernel-mode interrupt request, the second interrupt priority group includes the interrupt request whose priority is the same as that of the user-mode interrupt request or the interrupt request whose priority is lower than that of the user-mode interrupt request, and a priority of the first interrupt priority group is higher than that of the second interrupt priority group; and the CPU in the kernel mode sets a preemption operation for the interrupt controller, where the preemption operation includes that the first interrupt priority group preempts the second interrupt priority group.

In the technical solution of this application, the CPU sets the priority group for the interrupt controller in an initialization process after startup, so that an operation of disabling an interrupt and re-enabling an interrupt is no longer needed in a processing process of the user-mode interrupt request. This can greatly reduce a delay before the CPU in the user mode starts to execute the user-mode interrupt processing thread, so that the user-mode interrupt processing thread can be quickly responded to.

In addition, the CPU sets the preemption operation for the interrupt controller in the initialization process after startup. The kernel-mode IRQ can be served and responded to first by interrupting an ongoing user-mode IRQ. The kernel-mode IRQ can be served and responded to with no need to wait for an end of the user-mode interrupt handler, thereby ensuring that the kernel-mode interrupt request is not affected by a user-mode interrupt.

With reference to the first aspect, in some implementations of the first aspect, after that the CPU switches to the kernel mode from the user mode through second privilege level switching, the method further includes: The CPU in the kernel mode writes an end of interrupt EOI to the register of the interrupt controller, where the interrupt controller receives the EOI, and the EOI indicates the interrupt controller to unmask the interrupt request whose priority is the same as that of the user-mode interrupt request, or mask the interrupt request whose priority is lower than that of the user-mode interrupt request.

With reference to the first aspect, in some implementations of the first aspect, the method further includes: When the CPU in the user mode executes the user-mode interrupt handler, the CPU in the kernel mode concurrently detects a result status of the user-mode interrupt handler.

With reference to the first aspect, in some implementations of the first aspect, if the result status of the user-mode interrupt handler indicates that the user-mode interrupt handler does not end, the CPU in the kernel mode disables the user-mode interrupt request, and writes the end of interrupt EOI to the register of the interrupt controller.

In the technical solution of this application, when the CPU in the user mode runs the user-mode interrupt handler, a result status of the user-mode interrupt handler is concurrently detected, so that when an exception occurs in a processing process of the user-mode interrupt handler, the CPU can be effectively prevented from being stuck in the user mode to execute the user-mode interrupt handler, thereby ensuring normal running of the CPU.

According to a second aspect, a user-mode interrupt request processing apparatus is provided. The processing apparatus includes an initialization module, an interrupt exception processing module, a privilege level switching module, and a user-mode interrupt processing module. The initialization module in a kernel mode is configured to perform anonymization processing on a kernel address of a first interrupt exception handler to obtain a second interrupt exception handler. The interrupt exception processing module in the kernel mode is configured to: obtain a user-mode interrupt request, and execute the second interrupt exception handler to determine a user-mode interrupt handler corresponding to the user-mode interrupt request. The privilege level switching module is configured to switch to a user mode from the kernel mode through first privilege level switcihing, wherein the first privilege level switching comprises configuring a stack pointer, SP, to point to a user stack, and configuring a program counter, PC, to point to an address of the user mode. The user-mode interrupt processing module in the user mode is configured to execute the user-mode interrupt handler, where the first privilege level switching is switching without context recovery. The privilege level switching module is configured to switch to the kernel mode from the user mode through second privilege level switching, where the second privilege level switching is switching without context storage.

In the technical solution of this application, privilege level switching without context recovery and storage can greatly reduce a delay of user-mode interrupt processing, and the second interrupt exception handler without sensitive information such as the kernel address can ensure security of a system kernel while reducing the delay of user-mode interrupt processing.

With reference to the second aspect, in some implementations of the second aspect, that the initialization module in a kernel mode performs anonymization processing on a kernel address of a first interrupt exception handler includes: overwriting or deleting the kernel address and information in the kernel address in the interrupt exception handler.

With reference to the second aspect, in some implementations of the second aspect, the executing the second interrupt exception handler to determine a user-mode interrupt handler corresponding to the user-mode interrupt request includes: The interrupt exception processing module is configured to wake up a user-mode interrupt processing thread corresponding to the user-mode interrupt request, where the user-mode interrupt processing thread includes the user-mode interrupt handler; or the interrupt exception processing module is configured to obtain an address of the user-mode interrupt handler corresponding to the user-mode interrupt request.

With reference to the second aspect, in some implementations of the second aspect, that the interrupt exception processing module is configured to obtain an address of the user-mode interrupt handler corresponding to the user-mode interrupt request includes: The interrupt exception processing module is configured to obtain an interrupt number corresponding to the user-mode interrupt request; and the interrupt exception processing module is configured to obtain an address of the user-mode interrupt handler corresponding to the interrupt number.

In the technical solution of this application, for a single-thread or single-process application scenario, the address of the user-mode interrupt handler corresponding to the interrupt number may be directly obtained, thereby further shortening time for the CPU to run the second interrupt exception handler in the kernel mode, improving a response speed of the user-mode interrupt handler, and reducing a delay of user-mode interrupt processing.

With reference to the second aspect, in some implementations of the second aspect, the interrupt exception processing module is configured to obtain an interrupt number corresponding to the user-mode interrupt request includes: The interrupt exception processing module in the kernel mode is configured to read a register of an interrupt controller to obtain the interrupt number corresponding to the user-mode interrupt request, where the interrupt controller obtains an acknowledgement message, and the acknowledgement message indicates the interrupt controller to mask an interrupt request whose priority is the same as that of the user-mode interrupt request, or mask an interrupt request whose priority is lower than that of the user-mode interrupt request.

With reference to the second aspect, in some implementations of the second aspect, the initialization module in the kernel mode is further configured to: set an interrupt priority group for the interrupt controller, where the interrupt priority group includes a first interrupt priority group and a second interrupt priority group, the first interrupt priority group includes a kernel-mode interrupt request, the second interrupt priority group includes the interrupt request whose priority is the same as that of the user-mode interrupt request or the interrupt request whose priority is lower than that of the user-mode interrupt request, and a priority of the first interrupt priority group is higher than that of the second interrupt priority group; and set a preemption operation for the interrupt controller, where the preemption operation includes that the first interrupt priority group preempts the second interrupt priority group.

In the technical solution of this application, the CPU sets the priority group for the interrupt controller in an initialization process after startup, so that an operation of disabling an interrupt and re-enabling an interrupt is no longer needed in a processing process of the user-mode interrupt request. This can greatly reduce a delay before the CPU in the user mode starts to execute the user-mode interrupt processing thread, so that the user-mode interrupt processing thread can be quickly responded to.

In addition, the CPU sets the preemption operation for the interrupt controller in the initialization process after startup. The kernel-mode IRQ can be served and responded to first by interrupting an ongoing user-mode IRQ. The kernel-mode IRQ can be served and responded to with no need to wait for an end of the user-mode interrupt handler, thereby ensuring that the kernel-mode interrupt request is not affected by a user-mode interrupt.

With reference to the second aspect, in some implementations of the second aspect, the apparatus further includes a user-mode interrupt processing end module, and after that the privilege level switching module switches to the kernel mode from the user mode through the second privilege level switching, the user-mode interrupt processing end module in the kernel mode is configured to write an end of interrupt EOI to the register of the interrupt controller, where the interrupt controller receives the EOI, and the EOI indicates the interrupt controller to unmask the interrupt request whose priority is the same as that of the user-mode interrupt request, or mask the interrupt request whose priority is lower than that of the user-mode interrupt request.

With reference to the second aspect, in some implementations of the second aspect, the apparatus further includes a user-mode interrupt processing result detection module; and when the user-mode interrupt processing module in the user mode executes the user-mode interrupt handler, the user-mode interrupt processing result detection module in the kernel mode is configured to concurrently detect a result status of the user-mode interrupt handler.

With reference to the second aspect, in some implementations of the second aspect, the user-mode interrupt processing result detection module is further configured to: if the result status of the user-mode interrupt handler indicates that the user-mode interrupt handler does not end, disable the user-mode interrupt request in the kernel mode; and the user-mode interrupt processing end module is configured to write the end of interrupt EOI to the register of the interrupt controller.

In the technical solution of this application, when the CPU in the user mode runs the user-mode interrupt handler, a result status of the user-mode interrupt handler is concurrently detected, so that when an exception occurs in a processing process of the user-mode interrupt handler, the CPU can be effectively prevented from being stuck in the user mode to execute the user-mode interrupt handler, thereby ensuring normal running of the CPU.

According to a third aspect, a computer-readable storage medium is provided. The computer-readable storage medium stores computer instructions. When the computer instructions are run on a computer, the computer is enabled to perform the method in any possible implementation of the first aspect.

According to a fourth aspect, a computer program product is provided. The computer program product includes computer program code. When the computer program code is run on a computer, the computer is enabled to perform the method in any possible implementation of the first aspect.

### BRIEF DESCRIPTION OF DRAWINGS

FIG. 1 is a schematic diagram of an application scenario of a user-mode interrupt request processing method according to an embodiment of this application;
FIG. 2 is a schematic diagram of a current general procedure of executing a user-mode interrupt handler;
FIG. 3 is another schematic diagram of a current general procedure of executing a user-mode interrupt handler;
FIG. 4 is a schematic diagram of current driver-based user-mode interrupt processing;
FIG. 5 is another schematic diagram of current driver-based user-mode interrupt processing;
FIG. 6 is a schematic diagram of current callback-based user-mode interrupt processing;
FIG. 7 is a schematic diagram of a user-mode interrupt processing procedure according to an embodiment of this application;
FIG. 8 is another schematic diagram of a user-mode interrupt processing procedure according to an embodiment of this application;
FIG. 9 is a schematic diagram of an interrupt initialization processing procedure after a CPU is started according to an embodiment of this application;
FIG. 10 is a schematic comparison diagram of a kernel exception vector table according to an embodiment of this application;
FIG. 11 is a schematic diagram of a privilege level switching procedure according to an embodiment of this application;
FIG. 12 is still another schematic diagram of a user-mode interrupt processing procedure according to an embodiment of this application;
FIG. 13 is yet another schematic diagram of a user-mode interrupt processing procedure according to an embodiment of this application; and
FIG. 14 is a schematic diagram of a user-mode interrupt request processing apparatus 1400 according to an embodiment of this application.

### DESCRIPTION OF EMBODIMENTS

The following clearly describes technical solutions of this application with reference to accompanying drawings. It is clear that the described embodiments are some but not all of embodiments of this application. All other embodiments obtained by a person of ordinary skill in the art based on embodiments of this application without creative efforts shall fall within the protection scope of this application.

The following briefly describes several basic concepts related to embodiments of the present invention.

Interrupt request (IRQ): is an event sent by an interrupt controller to a central processing unit (CPU). When the CPU receives the IRQ, the CPU needs to store an ongoing program, pause the program, and execute a program corresponding to the IRQ. The IRQ may be triggered by hardware, or may be generated by hardware triggered by software. In this application, the interrupt request may be referred to as an interrupt for short.

Interrupt controller: is configured between hardware and a CPU, and is mainly used to collect IRQs generated by various hardware and sends the IRQs to the CPU. In this application, the interrupt controller is a general term, and has different names and different functional components in different systems. For example, for an ARM architecture, a name of the interrupt controller is a generic interrupt controller (GIC), and the GIC includes an interrupt acknowledgement register (IAR). There is a coupling between the GIC and the CPU, and the CPU in a kernel mode may read the IAR in the GIC. For an x86 architecture, a name of the interrupt controller is an advanced programmable interrupt controller (advanced programmable interrupt controller, (A)PIC). The (A)PIC includes an in-service register (ISR) and an interrupt mask register (interrupt mask register, IMR). There is a coupling between the (A)PIC and the CPU. The CPU in a kernel mode can read and write the ISR and the IMR in the (A)PIC.

When the interrupt controller receives the IRQ from the hardware, interrupt triggering is formed, where there are two forms of the interrupt triggering: level-triggering and edge-triggering. For level-triggering, the GIC/(A)PIC sends the IRQ to the CPU after identifying that a level of an interrupt signal line is a low level or a high level. The CPU immediately stops a current task and jumps to execute an interrupt exception handler. For edge-triggering, the GIC/(A)PIC notifies the CPU after identifying a pulse change of a level of an interrupt signal line, that is, the GIC/(A)PIC notifies the CPU after identifying a level of the interrupt signal line changes from a high level to a low level or from a low level to a high level. The CPU immediately stops a current task and jumps to execute an interrupt exception handler.

Thread (thread): is a minimum unit that an operating system can compute and schedule. It is included in a process and is an actual operating unit of the process. One thread refers to one single sequential control flow in a process. A plurality of threads can be included in one process, and the threads execute different tasks in parallel.

Process (process): is a program that is running on a computer, and is a manner for the computer to manage and run a program. The program itself is a description of instructions, data, and an organization form thereof, and the process is a real running entity of the program. In a process-oriented design system, a process is a basic execution entity of a program. In a thread-oriented design system, a process itself is not a basic running unit, but a container of a thread.

When a CPU executes a process, the process has five basic states. The process is in a new state, that is, the CPU registers a new process. The process is in a ready state, that is, a process has a running condition and waits for a system to allocate a CPU for running. The process is in a running state, that is, the process has obtained a CPU and the CPU is running the process. The process is in a waiting state, also referred to as a blocked state or a sleeping state, that is, a process does not meet a running condition and is paused and is waiting for an event to occur. For example, a process is waiting for using a resource, or a process is waiting for peripheral transmission. A process is in a terminated state, that is, a process completely a task normally, is terminated abnormally due to an insurmountable error, or is terminated by an operating system or a process having a termination right. The thread also has the five basic states. For brief description, details are not described herein again.

Context (context): is a static description of a running moment in a dynamic process of process/thread running. The process/thread running is a dynamic process. If the process/thread is paused, the context is a CPU state related to the process/thread at this moment. Generally, the CPU state related to the process/thread includes a value of a general-purpose register, a value of a status register, and the like. When the context is recovered, the CPU can continue to run from the paused position, and the process/thread can also continue to run.

context switch (context switch): If a system call, exception, or interruption occurs during running of a user-mode program, a kernel mode is needed for processing. In this case, the system traps to the kernel mode, and the kernel mode saves current user-mode context and recovers original context of the kernel mode. This process is a case of context switch.

A program counter (PC): is configured to store an instruction address register currently executed by a CPU. An instruction at an address pointed to by the program counter is an instruction to be executed by the CPU. An execution flow of the CPU may be changed by modifying the instruction pointed to by the program counter. The program counter is also referred to as an instruction pointer (IP) register.

Stack pointer register (SP): When a function is executed, a stack transfer parameter and a temporary variable of a storage function need to be used. The stack pointer register stores a current stack top. The stack pointer register can be used to read data in a stack.

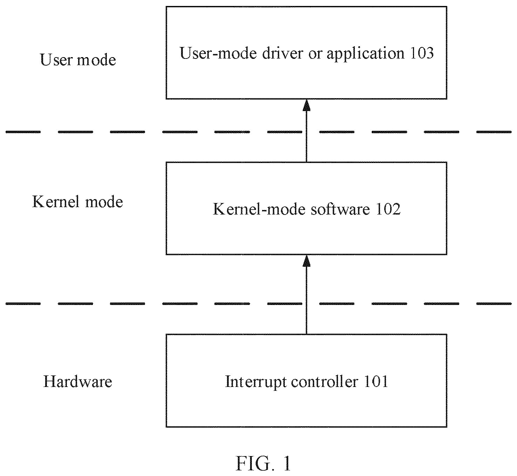

The method in embodiments of this application may be applied to a plurality of processor architectures, for example, may be applied to an ARM architecture or an x86 architecture, or may be applied to another processor architecture that already exists or may appear in the future. The following briefly describes an application scenario of a user-mode interrupt request processing method in an embodiment of this application with reference to FIG. 1. FIG. 1 is an application scenario of a user-mode interrupt request processing method according to an embodiment of this application.

An interrupt controller 101 in hardware sends an interrupt request to a CPU. Kernel-mode software 102 of the CPU in a kernel mode receives the interrupt request, and executes an interrupt exception handler in the kernel mode. If it is determined that the interrupt request is a user-mode interrupt request by running the interrupt exception handler, a user-mode driver or application 103 of the CPU in a user mode obtains interrupt information corresponding to the user-mode interrupt request, and runs the user-mode interrupt handler based on the interrupt information.

It should be understood that the interrupt controller may be a GIC in the ARM architecture or an APIC in the x86 architecture. A type of the interrupt controller is not limited in this embodiment of this application. For brief description, the following interrupt controller uses the GIC in the ARM architecture as an example.

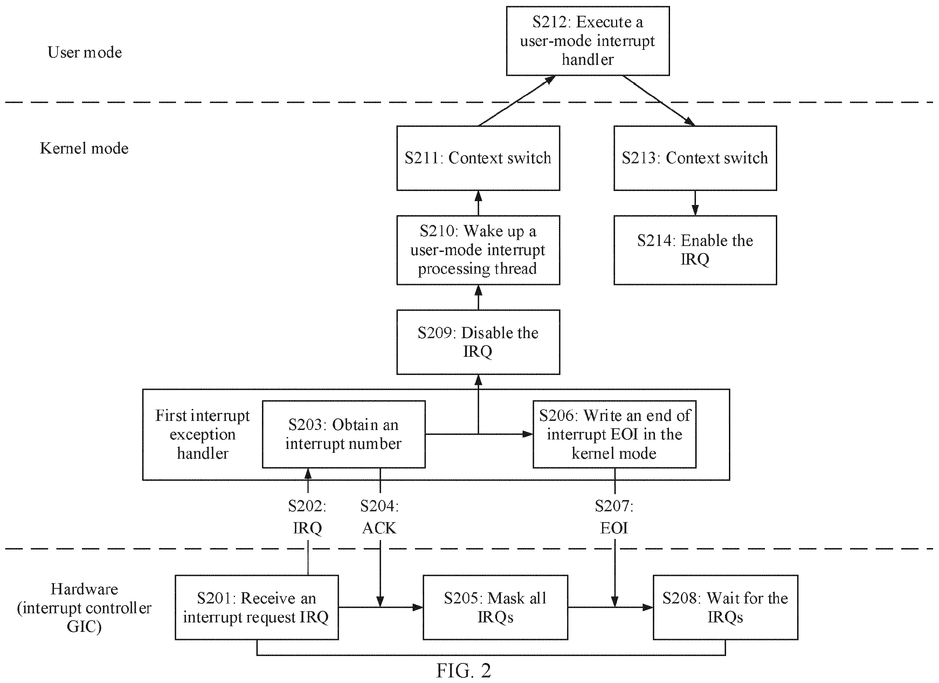

With reference to FIG. 2, the following describes a current general procedure in which the CPU in the user mode executes the user-mode interrupt handler. FIG. 2 is a schematic diagram of the current general procedure of executing the user-mode interrupt handler.

The general procedure in which the CPU in the user mode executes the user-mode interrupt handler is performed on the premise that an IRQ received by the CPU is the user-mode IRQ. Therefore, when FIG. 2 is described herein, the IRQ received by the CPU is the user-mode IRQ.

Currently, the general procedure in which the CPU in the user mode executes the user-mode interrupt handler may be divided into two parts. One part is interaction between the interrupt controller and the CPU after the CPU receives the interrupt request, and the other part is steps performed by the CPU respectively in the kernel mode and in the user mode when the CPU in the user mode needs to execute the user-mode interrupt handler corresponding to the user-mode interrupt request after the CPU receives the user-mode interrupt request.

First, after the CPU receives the interrupt request, interaction between the interrupt controller and the CPU is specifically the following steps S201 to S208.

S201: The GIC receives the interrupt request IRQ.

The GIC may receive different interrupt requests. In this case, IRQ_{X} may be used to represent the different interrupt requests, where the interrupt request may be a software interrupt or a hardware interrupt.

S202: The GIC sends the IRQ to the kernel-mode software 102 in the CPU.

S203: After the CPU receives the IRQ, an interrupt exception occurs. If the CPU in the user mode executes a user-mode process A, the CPU traps to the kernel mode to execute a first interrupt exception handler. When the CPU traps to the kernel mode, context of the user-mode process A needs to be stored. When the CPU in the kernel mode executes the first interrupt exception handler, the CPU in the kernel mode reads an interrupt number corresponding to the IRQ from an IAR in the GIC, to obtain the interrupt number corresponding to the IRQ. When the interrupt controller is the (A)PIC in the x86 architecture, the CPU in the kernel mode reads an interrupt number corresponding to the IRQ from an ISR in the (A)PIC.

S204: The GIC receives an acknowledgement corresponding to the IRQ.

When the CPU in the kernel mode reads the interrupt number corresponding to the IRQ from the IAR in the GIC, the GIC receives the acknowledgement corresponding to the IRQ. That is, when the CPU in the kernel mode reads the interrupt number corresponding to the IRQ from the IAR in the GIC, in step S204, for the CPU, the CPU obtains the interrupt number corresponding to the IRQ, and in step S204, for the GIC, the GIC receives the acknowledgement corresponding to the IRQ.

S205: After receiving the acknowledgement corresponding to the IRQ, the GIC masks all IRQs. All the IRQs are interrupt requests that include an IRQ that is being processed by the CPU, for example, a clock interrupt in the software interrupt and an I/O interrupt in the hardware interrupt. After receiving the acknowledgement, the GIC pulls up a priority of a CPU interface (CPU interface) in the GIC to automatically mask all the IRQs, that is, the GIC masks all the IRQs that include an IRQ that is being responded to.

When the interrupt controller is the (A)PIC in the x86 architecture, the (A)PIC does not receive the acknowledgement corresponding to the IRQ. That the (A)PIC masks all the IRQs means that the CPU in the kernel mode writes the interrupt number corresponding to the IRQ to an IMR of the (A)PIC to trigger the (A)PIC to mask all the IRQs.

S206: After obtaining the interrupt number corresponding to the IRQ in S203, the CPU in the kernel mode writes an end of interrupt (EOI) to the interrupt controller, that is, the CPU writes the EOI to a register of the GIC.

Currently, that the CPU in the kernel mode writes the EOI to the register of the GIC means that the CPU in the kernel mode completes execution of the first interrupt exception handler.

S207: The GIC receives the EOI. When the CPU in the kernel mode writes the EOI to the register of the GIC, the GIC receives the EOI. That is, when the CPU in the kernel mode writes the EOI to the register of the GIC, in step S206, for the GIC, the GIC receives the EOI.

S208: After receiving the EOI, the GIC unmasks and waits for all the IRQs. Specifically, after receiving the EOI, the GIC pulls down the priority of the CPU interface in the GIC, to unmask and wait for all the IRQs.

When the interrupt controller is the (A)PIC in the x86 architecture, the CPU modifies a bitmap in the IMR of the (A)PIC to unmask all the IRQs.

The acknowledgement ACK operation in S204 and the end of interrupt EOI operation in S206 need to be performed in the kernel mode, and the CPU in the user mode does not have a permission to read and write the registers in the two steps in S204 and S206.

The foregoing steps S201 to S208 implement interaction between the interrupt controller and the CPU after the CPU receives the interrupt request. This interaction is only that the CPU obtains the interrupt number corresponding to the user-mode IRQ, and the CPU in the user mode needs to run the user-mode interrupt handler. The user-mode interrupt handler is not completely executed in S201 to S208. Therefore, to enable the CPU in the user mode to execute the user-mode interrupt handler, next the CPU needs to switch to the user mode from the kernel mode. Specific steps are as follows S209 to S214.

S209: After the CPU obtains the interrupt number corresponding to the IRQ in S203, the CPU in the kernel mode disables the IRQ, to prevent nesting generated because the GIC sends the IRQ to the CPU again when the CPU in the user mode executes the user-mode interrupt handler corresponding to the IRQ.

Currently, a sequence of S209 and S206 is not limited. S209 may be performed before S206 to prevent nesting generated because the GIC continues to send the IRQ to the CPU when the CPU does not disable the IRQ in time after the GIC cancels all masking. S209 may alternatively be performed after S206. In this case, a local IRQ on the CPU is disabled to prevent nesting generated because the GIC continues to send the IRQ to the CPU when the CPU does not disable the IRQ in time after the GIC cancels all masking.

S210: The CPU in the kernel mode wakes up, based on the interrupt number corresponding to the IRQ obtained in S203, a user-mode interrupt processing thread corresponding to the IRQ. The CPU adds the user-mode interrupt processing thread to a scheduled queue, so that the user-mode interrupt thread enters a ready state from a new state or a blocked state. The interrupt number corresponding to the IRQ is also written to a register in the kernel mode, for example, a register R0, or may be another register. A woken-up object may also be a user-mode interrupt processing process corresponding to the IRQ.

S211: The CPU switches to the user mode from the kernel mode through context switch. For example, the CPU in the kernel mode schedules the user-mode interrupt processing thread, so that the user-mode interrupt processing thread enters a running state from the ready state, and recovers context of the user-mode interrupt processing thread in the kernel mode, so that the CPU switches to the user mode from the kernel mode. In the switching process, the context of the user-mode interrupt processing thread needs to be recovered, and therefore the switching process may also be referred to as "switching with context recovery".

S212: The CPU in the user mode executes a corresponding user-mode interrupt handler in the user-mode interrupt processing thread.

When the user-mode interrupt processing thread may correspond to interrupt numbers of a plurality of IRQs, that is, interrupt numbers corresponding to different IRQs can wake up a same user-mode interrupt processing thread, the same user-mode interrupt processing thread includes user-mode interrupt handlers corresponding to the different interrupt numbers. In this case, the CPU cannot directly find a to-be-executed user-mode interrupt handler based on the woken-up user-mode interrupt processing thread. Therefore, in this case, the CPU in the user mode needs to read an interrupt number corresponding to an IRQ in the register R0, find a corresponding user-mode interrupt handler based on the interrupt number, and then execute the user-mode interrupt handler. Alternatively, the CPU may further obtain the interrupt number corresponding to the IRQ by reading another general-purpose register.

When the user-mode interrupt processing thread is uniquely bound to the interrupt number corresponding to the IRQ, that is, when a user-mode interrupt processing thread woken up based on an interrupt number corresponding to an IRQ has only a user-mode interrupt handler corresponding to the interrupt number, the CPU directly executes the user-mode interrupt handler in the woken-up user-mode interrupt processing thread.

S213: After the CPU in the user mode completes execution of the user-mode interrupt handler corresponding to the IRQ, the CPU switches to the kernel mode from the user mode again through context switch. For example, the CPU stores context of the user-mode interrupt processing thread corresponding to the handler, so that the user-mode interrupt processing thread enters a terminated state or a blocked state from a running state, so that the CPU switches to the kernel mode from the user mode. In the switching process, the context of the user-mode interrupt processing thread needs to be stored, and therefore the switching process may also be referred to as "switching with context storage".

S214: The CPU in the kernel mode re-enables the IRQ, that is, the CPU may receive the IRQ again.

The foregoing is the current general procedure of user-mode interrupt processing. Complete user-mode interrupt processing can be completed only after a series of steps S201 to S214 are performed.

It should be noted that, in the current general processing procedure of the user-mode interrupt request, the interrupt ends before the user-mode interrupt handler is executed. This is because all the IRQs, including the clock interrupt, the I/O interrupt, and the like, are masked in S205. If the interrupt ends after the CPU in the user mode switches to the kernel mode from the user mode after completing execution of the user-mode interrupt handler, once an exception occurs when the CPU in the user mode executes the user-mode interrupt handler, the CPU cannot switch back to the kernel mode from the user mode, the interrupt cannot end. As a result, the CPU cannot respond to all the IRQs. In this case, the CPU is stuck in the user-mode interrupt handler, which affects normal running of the CPU. Therefore, before executing the user-mode interrupt handler, the CPU performs S206 and S207. Although this can prevent the exception of the user-mode interrupt handler from affecting normal running of the CPU to some extent, a speed of responding to the user-mode interrupt handler by the system further needs to be improved.

In addition, the interrupt controller can only mask all the IRQs (S205) or unmask all the IRQs (S208), but the CPU only wants to mask a responded IRQ, to prevent the interrupt controller from sending the IRQ to the CPU again when the CPU in the user mode executes a user-mode interrupt handler corresponding to the IRQ. Therefore, the CPU in the kernel mode needs to disable the responded IRQ (S209). With reference to S206, S207, and S209, when the CPU executes the user-mode interrupt handler corresponding to the IRQ, only the IRQ is masked, and a response of the CPU to another IRQ is not affected. The CPU in the kernel mode disables the responded IRQ (S209) and enables the IRQ (S214), which needs a large amount of time for processing, and also causes large overheads. This greatly affects a response speed of the user-mode interrupt handler.

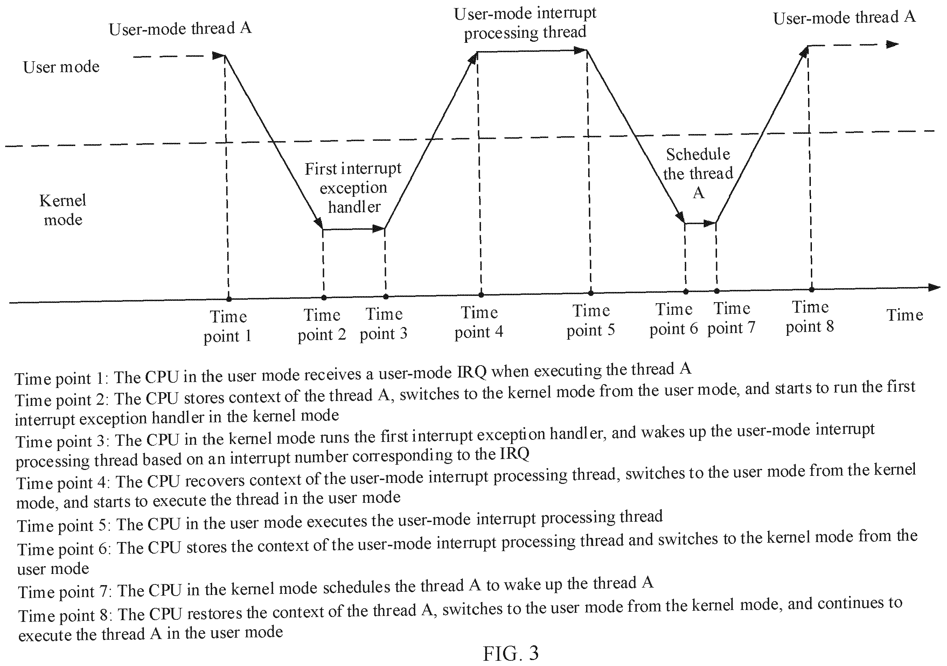

In addition, to execute the user-mode interrupt handler in the user mode, the CPU needs to perform switching with context recovery (S211), which also needs time for processing, and also affects a response speed of the user-mode interrupt handler. A specific case is described in detail with reference to FIG. 3 in step S211 that affects the response speed of the user-mode interrupt handler. FIG. 3 is another schematic diagram of a current general procedure of executing a user-mode interrupt handler.

Before a CPU receives an IRQ, that is, before a time point 1, the CPU in a user mode executes a user-mode thread A, and the CPU receives a user-mode IRQ at the time point 1. In this case, the CPU traps to a kernel mode, that is, in a time period from the time point 1 to a time point 2, the CPU needs to store context of the user-mode thread A, to switch to the kernel mode from the user mode. Then, starting from the time point 2, the CPU in the user mode executes a first interrupt exception handler, and completes execution of the first interrupt exception handler corresponding to S203, S204, S206, and S207. The CPU in the kernel mode wakes up, based on the interrupt number obtained in S203, a user-mode interrupt processing thread corresponding to the user-mode IRQ. In a time period from a time point 3 to a time point 4, the CPU recovers context of the user-mode interrupt processing thread, to switch to the user mode from the kernel mode, which corresponds to S211. Then, starting from the time point 4, the CPU in the user mode executes a user-mode interrupt handler, which corresponds to S212.

It can be seen from FIG. 3 that, before the CPU in the user mode executes the user-mode interrupt handler, that is, before the user-mode interrupt handler responds, the CPU needs to switch to the user mode from the kernel mode through switching with context recovery for a period of time. The time period from the time point 3 to the time point 4 directly affects a response speed of the user-mode interrupt handler.

At a time point 5, the CPU in the user mode completes execution of the user-mode interrupt handler, and the CPU starts to store the context of the user-mode interrupt processing thread, to switch to the kernel mode from the user mode, which corresponds to S213. At a time point 6, the CPU in the kernel mode enables the user-mode IRQ, which corresponds to S214. In addition, at a time point 6, the CPU in the kernel mode may wake up another thread by scheduling another thread. For example, the CPU in the kernel mode may wake up a thread A, so that the thread A enters a ready state from a blocked state. At a time point 7, the CPU starts to recover context of the thread A to switch to the user mode from the kernel mode. At a time point 8, the CPU in the user mode continues to execute the user-mode process A.

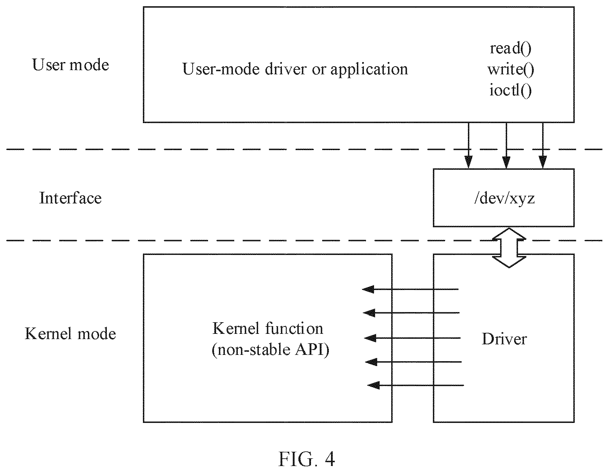

To implement the general processing procedure of the user-mode interrupt request, there is a solution in which a Linux driver is used to implement user-mode interrupt processing. A specific procedure is shown in FIG. 4. FIG. 4 is a schematic diagram of conventional driver-based user-mode interrupt processing.

The user-mode interrupt processing solution herein is a specific implementation of the foregoing steps S210, S211, S212, and S213. A specific step is to insert a driver in a Linux kernel mode, where an interface exists between the driver and the user mode, and a user-mode interrupt processing thread may perform interrupt registration through the interface. A user-mode application passes through interfaces such as read(), write(), and ioctl() to read an interface file exposed by the driver to the user mode. The CPU in the user mode traps to the kernel mode, and the user-mode interrupt processing thread is blocked and waits in the kernel mode. After receiving a user-mode interrupt request, the kernel-mode driver wakes up the user-mode interrupt processing thread in the blocked state, so that the user-mode interrupt processing thread enters a ready state. Then, the CPU in the kernel mode schedules the user-mode interrupt processing thread, so that the user-mode interrupt processing thread enters a running state from the ready state, and recovers context of the user-mode interrupt processing thread in the kernel mode, so that the CPU switches to the user mode from the kernel mode (S211). The CPU in the user mode runs a user-mode interrupt handler in the user-mode interrupt processing thread (S212). After completing execution of the user-mode interrupt handler, the CPU in the user mode returns to the kernel mode by using the interface file.

Although the driver-based user-mode interrupt processing solution can implement the user-mode interrupt processing, when the user-mode thread is woken up, a large amount of interrupt-independent logic processing exists, for example, signal processing, statistics collection, and load balancing. In addition, no improvement is made on the current user-mode interrupt processing procedure. Therefore, the user-mode interrupt processing process in this solution is still lengthy and time-consuming, causes huge overheads, and cannot meet a high performance requirement of a user-mode interrupt on a delay.

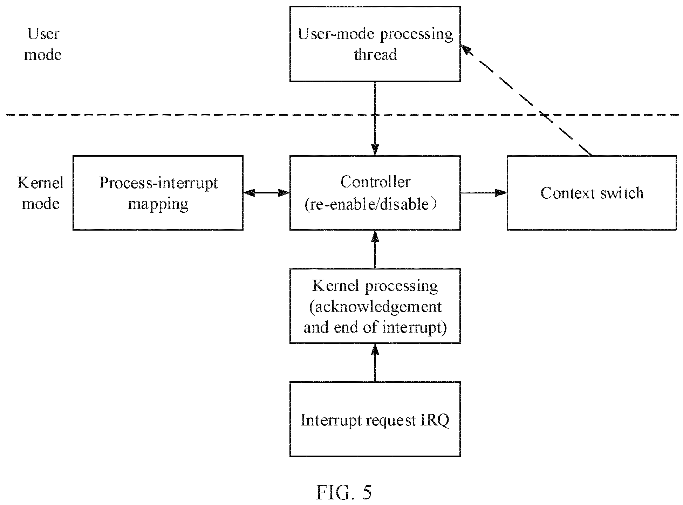

To reduce the large amount of interrupt-independent logic processing that exists when the user-mode thread is woken up in the kernel mode in the user-mode interrupt processing process, the conventional driver-based user-mode interrupt processing solution in FIG. 4 may be improved. The following describes the solution with reference to FIG. 5. FIG. 5 is another schematic diagram of driver-based user-mode interrupt processing.

After registration of a user-mode interrupt processing process interrupts, the CPU in a kernel mode records an interrupt number corresponding to a user-mode IRQ and a user-mode interrupt processing process corresponding to the interrupt number in a process-interrupt mapping table (Process-IRQ). After the CPU in the kernel mode receives the user-mode IRQ, when the CPU in the kernel mode runs a first interrupt exception handler, the CPU in the kernel mode still needs to perform acknowledgement (S204) and end of interrupt (S206) processing. When the user-mode IRQ (S209) is disabled and the user-mode interrupt processing process (210) is woken up, the CPU in the kernel mode directly obtains information about a user-mode interrupt processing thread from the Process-IRQ mapping table. In this way, interrupt-independent logic processing such as load balancing and signal processing can be bypassed, and context switch can be directly implemented, thereby improving efficiency of processing a user-mode interrupt request. However, the solution in FIG. 5 only improves the process of obtaining the information about the user-mode interrupt processing process, but does not change the user-mode interrupt processing procedure. That is, before the CPU in a user mode executes the user-mode interrupt handler, processing time is still needed in the kernel mode, and the solution in FIG. 5 still cannot meet a high performance requirement of processing the user-mode interrupt request.

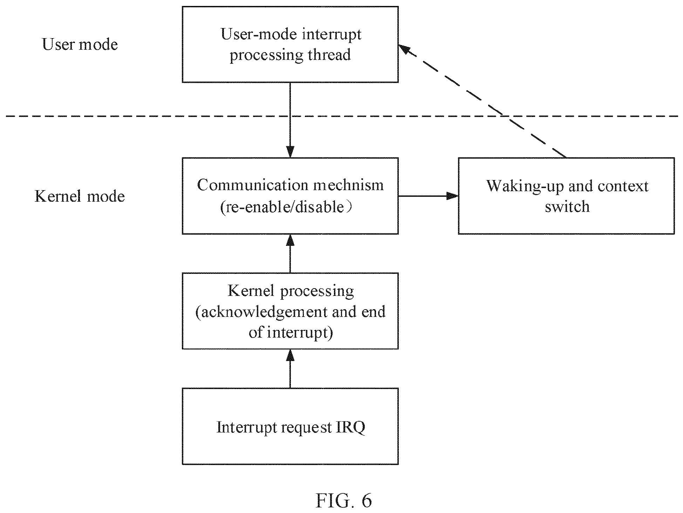

With development of the kernel, there are increasing requirements for the user-mode driver. A microkernel incorporates the user-mode driver and user-mode interrupt into an overall design of the system. That is, in user-mode interrupt processing, the existing interface file is not used to wake up the user-mode interrupt processing thread, but a dedicated communication mechanism is designed for user-mode interrupt processing. The following describes the solution with reference to FIG. 6. FIG. 6 is a schematic diagram of callback-based user-mode interrupt processing.

As shown in FIG. 6, before scheduling and waking up the user mode and context switch, there is a communication mechanism. A function of the communication mechanism is similar to that of the Process-IRQ mapping table in FIG. 5. After a user-mode IRQ is generated, the CPU in the kernel mode disables the user-mode IRQ. The CPU in the kernel mode may directly obtain, by using the communication mechanism, an interrupt number corresponding to the user-mode IRQ and information about a user-mode interrupt processing thread, and transfer the information to the user mode, thereby reducing costs of notifying the user-mode interrupt processing thread in the kernel mode. For example, a Port mechanism is used in a Zircon kernel, and a Notification mechanism is used in a seL4 kernel. The solution in FIG. 6 can reduce some overheads when the user-mode interrupt is implemented. However, an interrupt processing logic in the solution in FIG. 6 still complies with the general processing procedure in FIG. 1, and still cannot meet a high performance requirement of processing the user-mode interrupt request.

Although all the foregoing solutions can implement the user-mode interrupt, the user-mode interrupt processing procedures in the foregoing solutions comply with the user-mode interrupt processing procedure shown in FIG. 1. A series of operations such as the acknowledgement corresponding to the IRQ (S204), the end of interrupt (S206), disabling of the IRQ (S209), waking up of the user-mode interrupt processing thread (S210), the context switch (S211 and S212), and enabling of the IRQ (S214) need to be performed in the kernel mode. The series of operations of the CPU in the kernel mode directly affect a response speed of the user-mode interrupt. Therefore, how to reduce a delay of user-mode interrupt processing is an urgent problem to be resolved.

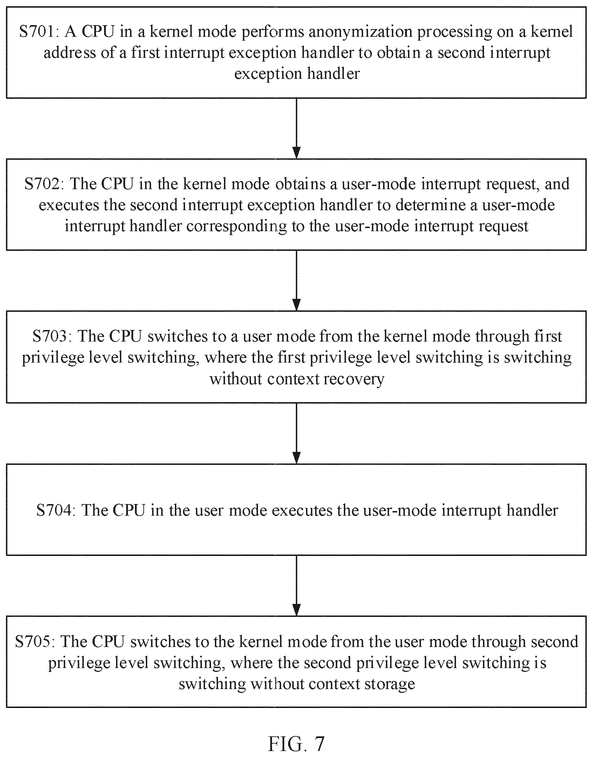

An embodiment of this application provides a user-mode interrupt request processing method, to reduce the delay of user-mode interrupt processing. The following describes the solutions in this embodiment of this application with reference to FIG. 7. FIG. 7 is a schematic diagram of a user-mode interrupt request processing procedure according to an embodiment of this application.

S701: A CPU in a kernel mode performs anonymization processing on a kernel address of a first interrupt exception handler to obtain a second interrupt exception handler.

The anonymization processing is to remove sensitive information, especially security-related information, for example, information related to a kernel address in an interrupt exception handler, for example, the kernel address itself and information in the kernel address, where the information in the kernel address is information that can be obtained based on the kernel address.

For example, the anonymization processing may be implemented through overwriting, deletion, or the like, that is, the anonymization processing may delete or overwrite the kernel address and the information about the kernel address from the first interrupt exception handler, to obtain the second interrupt exception handler.

In other words, the second interrupt exception handler is the first interrupt exception handler obtained by performing anonymization processing, that is, the second interrupt exception handler does not include the kernel address and the information about the kernel address.

S702: The CPU in the kernel mode obtains a user-mode interrupt request, and executes the second interrupt exception handler to determine a user-mode interrupt handler corresponding to the user-mode interrupt request.

The second interrupt exception handler is used by the CPU in the kernel mode to determine the user-mode interrupt handler corresponding to the user-mode interrupt request, so that the CPU may directly run the user-mode interrupt handler after switching to a user mode from the kernel mode.

S703: The CPU switches to a user mode from the kernel mode through first privilege level switching, where the first privilege level switching is switching without context recovery.

During the first privilege level switching, context of a user-mode interrupt processing thread does not need to be recovered, so that processing time of the CPU can be reduced. Specifically, in the process shown in FIG. 3, when the CPU switches to the user mode from the kernel mode to run the user-mode interrupt handler, the context of the user-mode interrupt processing thread needs to be recovered, that is, from the time point 3 to the time point 4 in FIG. 3, the CPU needs processing time to recover the context of the user-mode interrupt processing thread. However, the first privilege level switching in this application does not need to recover the context of the user-mode interrupt processing thread, so that processing time from the time point 3 to the time point 4 can be reduced.

S704: The CPU in the user mode executes the user-mode interrupt handler.

S705: The CPU switches to the kernel mode from the user mode through second privilege level switching, where the second privilege level switching is switching without context storage.

Similarly, during the second privilege level switching, the context of the user-mode interrupt processing thread does not need to be stored. In this way, the user mode can be directly switched back to the kernel mode, thereby reducing overall processing time of the user-mode interrupt processing thread. Specifically, in the process shown in FIG. 3, when the CPU switches back to the kernel mode from the user mode, the context of the user-mode interrupt processing thread needs to be stored, that is, from the time point 5 to the time point 6 in FIG. 3, the CPU needs processing time to store the context of the user-mode interrupt processing thread. However, the second privilege level switching in this application does not need to store the context of the user-mode interrupt processing thread, so that processing time from the time point 5 to the time point 6 can be reduced.

In the technical solution of this application, privilege level switching without context recovery and storage can greatly reduce a delay of user-mode interrupt processing, and the second interrupt exception handler without sensitive information such as the kernel address can ensure security of a system kernel while reducing the delay of user-mode interrupt processing.

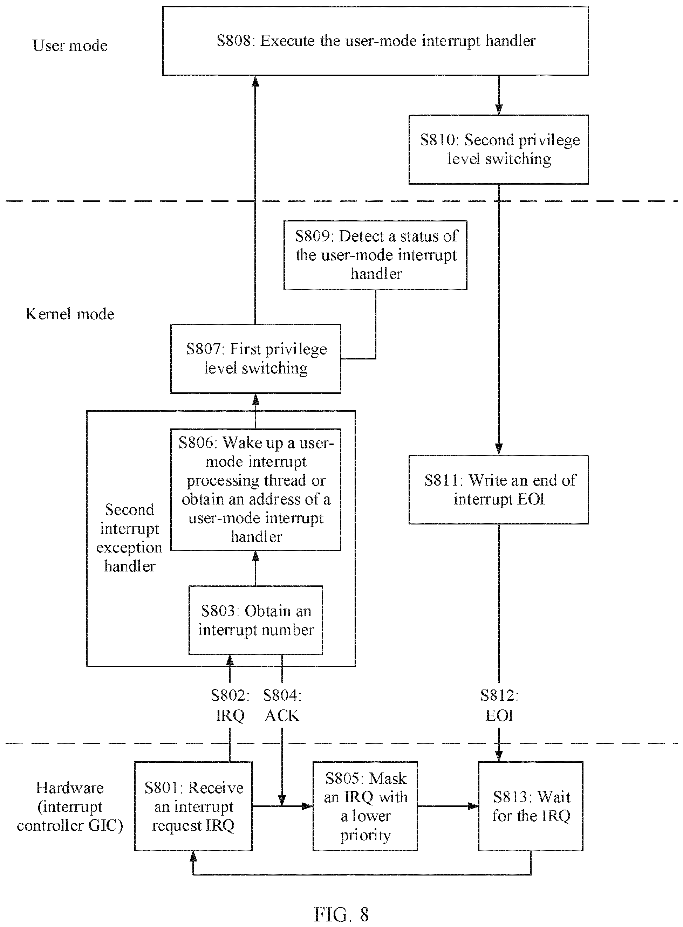

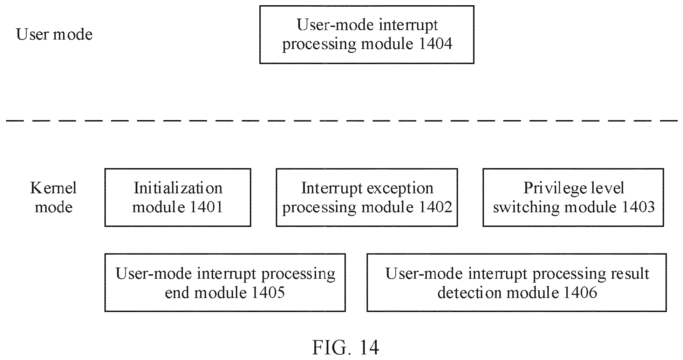

The following describes in detail a user-mode interrupt request processing method and apparatus provided in this application with reference to FIG. 8 to FIG. 14. FIG. 8 to FIG. 13 describe in detail the user-mode interrupt request processing method according to an embodiment of this application. FIG. 14 describes in detail the user-mode interrupt request processing apparatus according to an embodiment of this application. In the following specific solution description, an example in which an interrupt controller is a GIC in an ARM architecture is used for detailed description.

FIG. 8 is a schematic diagram of a user-mode interrupt processing procedure according to an embodiment of this application. First, the user-mode interrupt processing procedure in this application is briefly and comprehensively described. It should be noted that FIG. 8 is an overall procedure of user-mode interrupt processing according to this application, and steps in FIG. 8 include the steps in FIG. 7.

S801: The GIC receives a user-mode interrupt request IRQ. It should be understood that the GIC may receive different interrupt requests, and in this case, IRQ_{X} may be used to represent the different interrupt requests. For example, the interrupt request may be a software interrupt or a hardware interrupt. This is not limited in this embodiment of this application.

S802: The GIC sends the user-mode IRQ to a CPU, and the CPU in a kernel mode obtains the user-mode IRQ, which corresponds to S702.

S803: The CPU obtains an interrupt number corresponding to the user-mode IRQ. It should be understood that, after the CPU receives the user-mode IRQ, an interrupt exception occurs. If the CPU in a user mode executes a user-mode process A, the CPU traps to the kernel mode to execute a second interrupt exception handler, to determine a user-mode interrupt handler corresponding to the user-mode interrupt request, which corresponds to S702. For example, when the CPU in the kernel mode executes the second interrupt exception handler, the CPU in the kernel mode reads an interrupt number corresponding to the user-mode IRQ from an IAR in the GIC, to obtain the interrupt number corresponding to the user-mode IRQ. For another example, when the interrupt controller is an (A)PIC in an x86 architecture, the CPU in the kernel mode may read an interrupt number corresponding to the IRQ from an ISR in the (A)PIC. A manner in which the CPU obtains the interrupt number is not limited in this embodiment of this application.

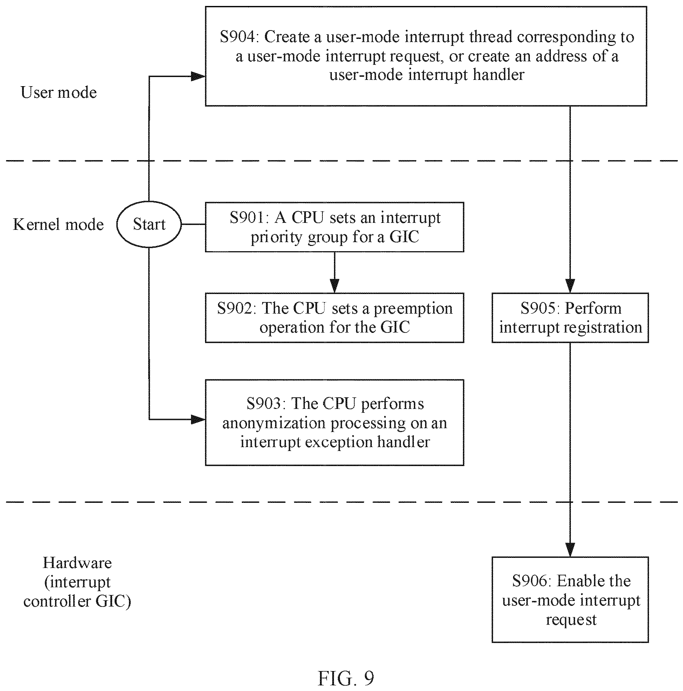

It should be understood that the second interrupt exception handler in the solution of this application is obtained by performing anonymization processing, by the CPU in the kernel mode, on a kernel address of a first interrupt exception handler, and the second interrupt exception handler does not include kernel sensitive information, for example, a kernel address and information in the kernel address. A specific step in which the CPU in the kernel mode performs anonymization processing on the kernel address of the first interrupt exception handler is in an interrupt initialization procedure after the CPU is started, which is described in detail with reference to FIG. 9 in the following.

S804: The GIC receives an acknowledgement corresponding to the user-mode IRQ. For example, when the CPU in the kernel mode reads the interrupt number corresponding to the user-mode IRQ from the IAR in the GIC, the GIC receives the acknowledgement corresponding to the IRQ. That is, when the CPU in the kernel mode reads the interrupt number corresponding to the IRQ from the IAR in the GIC, in step S803, for the CPU, the CPU obtains the interrupt number corresponding to the user-mode IRQ, and in step S803, for the GIC, the GIC receives the acknowledgement corresponding to the user-mode IRQ. A manner in which the GIC receives the acknowledgement corresponding to the user-mode IRQ is not limited in this embodiment of this application.

S805: After receiving the acknowledgement corresponding to the user-mode IRQ, the GIC masks an interrupt request whose priority is the same as that of the user-mode IRQ or masks an interrupt request whose priority is lower than that of the user-mode IRQ.

It should be understood that, an implementation of masking the interrupt request whose priority is the same as that of the user-mode IRQ or masking the interrupt request whose priority is lower than that of the user-mode IRQ is inseparable from setting a priority group for the GIC by the CPU in the interrupt initialization procedure after the CPU is started, which is described in detail with reference to FIG. 9 below.

S806: When executing the second interrupt exception handler, the CPU in the kernel mode wakes up a user-mode interrupt processing thread corresponding to the interrupt number obtained in S803 or obtains an address of the user-mode interrupt handler corresponding to the interrupt number obtained in S803.

It should be understood that, whether the CPU in the kernel mode may wake up the user-mode interrupt processing thread based on the interrupt number, or obtain the address of the user-mode interrupt handler depends on a specific step in which a user-mode driver or application 103 in the user mode after the CPU is started registers the user-mode interrupt request. A specific step in which the CPU registers the user-mode interrupt request is described in detail with reference to FIG. 9.

In a possible implementation, the CPU in the kernel mode wakes up the user-mode interrupt processing thread based on the interrupt number corresponding to the user-mode IRQ, so that the user-mode interrupt processing thread enters a ready state from a blocked state.

It should be noted that, that the CPU in the kernel mode wakes up the user-mode interrupt processing thread is to add the user-mode interrupt processing thread to a scheduled queue. The interrupt number corresponding to the IRQ is also written to a register in the kernel mode, for example, a register R0, or may be another general-purpose register, for example, a register R1 or a register R2. This is not limited herein. It should be understood that, herein, a user-mode interrupt processing process corresponding to the IRQ may also be woken up. In this application, the user-mode interrupt processing thread is mainly used for description.

In a possible implementation, the CPU in the kernel mode obtains the address of the user-mode interrupt handler based on the interrupt number corresponding to the user-mode IRQ. It should be understood that the CPU may find the user-mode interrupt handler based on the address, and run the handler.

S807: The CPU in the kernel mode may perform first privilege level switching by using a first hardware switching instruction, to implement switching to the user mode from the kernel mode, where the first privilege level switching is switching without context recovery, which corresponds to S703.

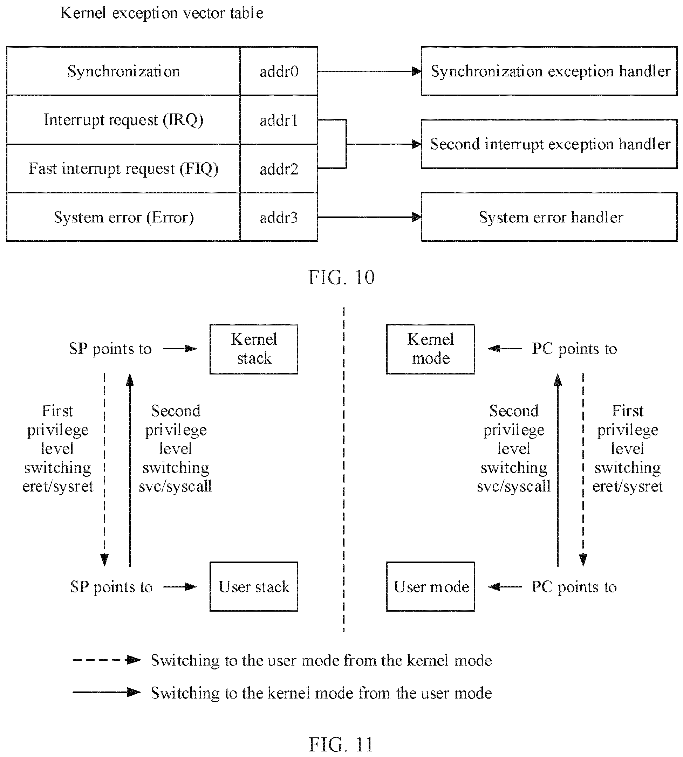

It should be understood that, in this embodiment of this application, the CPU may switch to the user mode from the kernel mode through the first privilege level switching, and does not need to recover the user-mode interrupt processing thread woken up in S806. This is because the second interrupt exception handler that does not include the kernel address is obtained in the interrupt initialization procedure after the CPU is started, so that the CPU in the kernel mode does not leave kernel sensitive information such as the kernel address when executing the second interrupt exception handler (S803 and S806), and a security problem that is caused by leakage of any kernel sensitive information when the CPU in the user mode executes the user-mode interrupt handler after the CPU directly switches to the user mode from the kernel mode is avoided to some extent. A specific process of the first privilege level switching is subsequently described in detail with reference to FIG. 11.

S808: The CPU in the user mode executes the user-mode interrupt handler, which corresponds to S704.

If in S806, the CPU in the kernel mode wakes up the user-mode interrupt processing thread based on the interrupt number corresponding to the user-mode IRQ, and then the CPU in the kernel mode schedules the user-mode processing thread. After S807, the CPU switches to the user mode from the kernel mode, and executes the corresponding user-mode interrupt handler in the thread.

In a possible implementation, when the user-mode interrupt processing thread may correspond to interrupt numbers of a plurality of user-mode IRQs, that is, interrupt numbers corresponding to different user-mode IRQs can wake up a same user-mode interrupt processing thread, the same user-mode interrupt processing thread includes user-mode interrupt handlers corresponding to different interrupt numbers. In this case, the CPU cannot directly find a to-be-executed user-mode interrupt handler based on the woken-up user-mode interrupt processing thread. Therefore, in this case, the CPU in the user mode needs to read an interrupt number corresponding to a user-mode IRQ in the register R0, find a corresponding user-mode interrupt handler based on the interrupt number, and then execute the user-mode interrupt handler. Alternatively, the CPU may further obtain the interrupt number corresponding to the IRQ by reading another general-purpose register, for example, a register R1 or a register R2. This is not limited herein.

In a possible implementation, when the user-mode interrupt processing thread is uniquely bound to the interrupt number corresponding to the user-mode IRQ, that is, when a user-mode interrupt processing thread woken up based on an interrupt number corresponding to a user-mode IRQ has only a user-mode interrupt handler corresponding to the interrupt number, the CPU directly executes the user-mode interrupt handler in the woken-up user-mode interrupt processing thread.

If in S806, the CPU in the kernel mode obtains the address of the user-mode interrupt handler based on the interrupt number corresponding to the user-mode IRQ, after S807, after the CPU switches to the user mode from the kernel mode, the PC points to the address of the user-mode interrupt handler, and the CPU in the user mode directly runs the user-mode interrupt handler.

S809: When the CPU in the user mode executes the user-mode interrupt handler, the CPU in the kernel mode concurrently detects a result status of the user-mode interrupt handler.

It should be understood that, to prevent the CPU from being stuck in the user mode to execute the user-mode interrupt handler after the exception occurs when the CPU in the user mode executes the user-mode interrupt handler, affecting normal running of the CPU, the CPU in the kernel mode concurrently detects the result status of the user-mode interrupt handler, so that the CPU can detect the result status of the user-mode interrupt handler in real time. If a processing result of the user-mode interrupt handler is abnormal, the CPU performs a corresponding operation, which is described in detail subsequently.

In addition, an implementation in which the CPU in the kernel mode can concurrently detects the result status of the user-mode interrupt handler is inseparable from the preemption operation in the interrupt initialization procedure after the CPU is started, which is described in detail in the following with reference to FIG. 9.

S810: The CPU in the user mode may perform second privilege level switching by using a second hardware switching instruction, to switch to the kernel mode from the user mode, where the second privilege level switching is switching without context storage, which corresponds to S705.

It should be understood that, in this embodiment of this application, the CPU may switch to the kernel mode from the user mode through the second privilege level switching, and does not need to store context of the user-mode interrupt processing thread. This is because the CPU in the kernel mode does not need context of a completed user-mode interrupt processing thread. A specific process of the second privilege level switching is subsequently described in detail with reference to FIG. 11.

S811: The CPU in the kernel mode writes an end of interrupt EOI to a register of the GIC.

S812: The GIC receives the EOI. For example, when the CPU in the kernel mode writes the EOI to the register of the GIC, the GIC receives the EOI, that is, when the CPU in the kernel mode writes the EOI to the register of the GIC, in step S811, for the GIC, the GIC receives the EOI.

S813: After receiving the EOI, the GIC cancels the masked interrupt request in S805, and waits for all interrupt requests. For example, after receiving the EOI, the GIC pulls down a priority of a CPU interface in the GIC, to cancel the masked interrupt request in the S805. A specific implementation in which the GIC cancels the interrupt request is not limited in this embodiment of this application.

It should be noted that, when the user-mode IRQ ends for using, the CPU releases a user-mode interrupt service through an interface provided in the kernel mode.

The foregoing steps are an overall description of the user-mode interrupt processing method provided in this embodiment of this application. With reference to FIG. 9, the following specifically describes an interrupt initialization processing procedure that the CPU needs to perform before the CPU receives the user-mode IRQ. The procedure mainly includes initialization procedures S901, S902, and S903 of the CPU in the kernel mode, operations of the CPU in the user mode and in the kernel mode when the user-mode IRQ is registered, and steps that need to be cooperated by the GIC. FIG. 9 is a schematic diagram of an interrupt initialization processing procedure after a CPU is started according to an embodiment of this application.

S901: After the CPU is started, the CPU in the kernel mode sets an interrupt priority group for the GIC, where the interrupt priority group includes a first interrupt priority group and a second interrupt priority group, the first interrupt priority group includes a kernel-mode interrupt request, the second interrupt priority group includes a user-mode interrupt request, or an interrupt request whose priority is lower than that of the user-mode interrupt request, and a priority of the first interrupt priority group is higher than that of the second interrupt priority group.

It should be understood that the interrupt priority group includes interrupt requests of different priorities, where the kernel-mode interrupt request is an interrupt request registered in the kernel mode, and a kernel-mode interrupt handler corresponding to the interrupt request is subsequently run in the kernel mode. The user-mode interrupt request is an interrupt request registered by a user-mode driver or application, and a user-mode interrupt handler corresponding to the interrupt request is subsequently run in the user mode. In this embodiment of this application, a specific interrupt request type of the interrupt request whose priority is lower than that of the user-mode interrupt request is not limited.

In a possible implementation, a specific implementation in which the CPU sets the interrupt priority group for the GIC may be as follows: The CPU sets the interrupt priority group by configuring a value of an interrupt priority register (IPRIORITYR) corresponding to each interrupt request in the GIC. For example, an IPRIORITYR corresponding to the kernel-mode interrupt request is set to a high value, and an IPRIORITYR corresponding to the user-mode interrupt request is set to a low value. A specific implementation of the interrupt priority group is not limited in this embodiment of this application.

The CPU in the kernel mode sets the interrupt priority group for the GIC to assist the GIC in masking the interrupt request that belongs to the second interrupt priority group after receiving the acknowledgement corresponding to the user-mode IRQ.

For example, after the CPU subsequently receives the IRQ (S801), the CPU in the kernel mode obtains the interrupt number corresponding to the IRQ by reading the IAR of the GIC (S803). The GIC may know whether the IRQ belongs to the first interrupt priority group or the second interrupt priority group. After the GIC receives the ACK corresponding to the IRQ that belongs to the second interrupt priority group (S804), the GIC may pull up a priority of a CPU interface in the GIC, to mask the IRQ that belongs to the second interrupt priority group, that is, in S805, the interrupt request whose priority is the same as that of the user-mode IRQ is masked or the interrupt request whose priority is lower than that of the user-mode IRQ is masked.

The interrupt priority group is set in the interrupt initialization procedure after the CPU is started, so that after receiving the acknowledgement message corresponding to the user-mode IRQ, the GIC can be assisted in masking the IRQ that belongs to the second interrupt priority group, thereby preventing a nesting problem caused when the CPU receives the user-mode IRQ again when the user-mode IRQ is being served. Therefore, in this embodiment of this application, the operation of disabling the interrupt and re-enabling the interrupt is no longer needed, to implement the foregoing effect. This can greatly reduce a delay before the CPU in the user mode starts to execute the user-mode interrupt processing thread, so that the user-mode interrupt processing thread can be quickly responded to. In addition, the interrupt priority group is set, and the IRQ that belongs to the second interrupt priority group is masked, so that the user-mode IRQ being served is not affected by the IRQ that has the same priority or the lower priority.

In a possible implementation, the interrupt request whose priority is the same as or lower than the user-mode IRQ may be masked by using a technology such as a non-maskable interrupt (NMI). A specific manner of masking the interrupt request whose priority is the same as or lower than the user-mode IRQ is not limited in this embodiment of this application.

S902: The CPU in the kernel mode sets a preemption operation for the GIC, where the preemption operation includes that the first interrupt priority group preempts the second interrupt priority group.

It should be understood that, in the solution of this application, when the CPU is responding to and serving the user-mode IRQ that belongs to the second interrupt priority group (S808), the GIC has not received the end of interrupt EOI (S811). Although the interrupt priority group is set for the GIC in S801, the GIC may send the kernel-mode IRQ that belongs to the first interrupt priority group to the CPU. However, in this case, the CPU cannot respond to and serve the kernel-mode IRQ, that is, the CPU cannot trap to the kernel mode from the user mode, and cannot read, in the kernel mode, the interrupt number corresponding to the kernel-mode IRQ in the IAR of the GIC. A series of problems are caused by a fact that the kernel-mode IRQ cannot be responded to and served. For example, a problem that scheduling and timing cannot be performed because the kernel-mode IRQ, such as a clock interrupt request and an inter-processor interrupt (IPI), cannot be responded to or served.

Therefore, in the interrupt initialization procedure after the CPU is started, the CPU in the kernel mode needs to set the preemption operation for the GIC. That the first interrupt priority group preempts the second interrupt priority group indicates that before the GIC receives the end of interrupt EOI, after the GIC sends the kernel-mode IRQ that belongs to the first interrupt priority group to the CPU, the CPU may trap to the kernel mode, and read the interrupt number corresponding to the kernel-mode IRQ in the IAR of the GIC, so that the kernel-mode IRQ is served and responded to. In this case, the CPU can interrupt an ongoing user-mode IRQ, so that the kernel-mode IRQ is served and responded to first. That is, the kernel-mode IRQ can be served and responded to with no need to wait for an end of the user-mode interrupt handler, thereby ensuring that the kernel-mode interrupt request is not affected by the user-mode interrupt, and ensuring stability of system running.

In S809, the preemption operation needs to be used, so that the CPU in the kernel mode can concurrently detects the result status of the user-mode interrupt handler. Specific implementation steps are provided in the subsequent detailed description of S809.

It should be noted that the CPU may set the preemption operation for the GIC in any one of the following manners.

In a possible implementation, the CPU in the kernel mode sets the preemption operation for the GIC in combination with a software driver. For example, except the GIC, a controller having an interrupt sending capability may be connected to the GIC in parallel or cascade mode. The controller having an interrupt sending capability has a capability of setting the interrupt priority group and setting the preemption operation for the GIC. Therefore, the CPU in the kernel mode drives the controller having an interrupt sending capability by using software to set the priority group or set the preemption operation for the GIC. The controller having an interrupt sending capability may be an extended interrupt and event controller (EXTI). It should be understood that the controller having an interrupt sending capability may also be a controller other than the EXTI. This is not limited in this embodiment of this application.

In a possible implementation, the CPU in the kernel mode directly sets the preemption operation for the GIC. Specifically, the CPU may set the preemption operation for the GIC by configuring a binary point register (BPR) and an IPRIORITYR. For example, the BPR may determine that most significant n bits of values of the IPRIORITYR corresponding to each interrupt request are used for preemption, and the BPR may configure the most significant bit for preemption. Then, when the interrupt request is registered, the most significant bit of the IPRIORITYR corresponding to the kernel-mode interrupt request may be set to 0, and the most significant bit of the IPRIORITYR corresponding to the kernel-mode interrupt request may be set to 1. According to the configuration of the BPR, the kernel-mode interrupt request with the most significant bit of the PRIORITYR being 0 can preempt the user-mode interrupt request with the most significant bit of the PRIORITYR being 1. This can implement the preemption operation of the GIC. A specific manner in which the GIC sets the preemption operation is not limited in this embodiment of this application.

The CPU in the kernel mode sets the preemption operation for the GIC. The kernel-mode IRQ can be served and responded to first by interrupting an ongoing user-mode IRQ. The kernel-mode IRQ can be served and responded to with no need to wait for an end of the user-mode interrupt handler, thereby ensuring that the kernel-mode interrupt request is not affected by a user-mode interrupt. When an exception occurs in the user-mode interrupt handler, the kernel-mode IRQ can still be served and responded to by the CPU, thereby further ensuring normal running of the CPU.

S903: The CPU in the kernel mode performs anonymization processing on a kernel address of a first interrupt exception handler to obtain a second interrupt exception handler, which corresponds to S701.

It should be understood that the second interrupt exception handler does not include a kernel address and information that can be obtained by using the kernel address.

It should be noted that in the solution of this application, after S806, that is, after the CPU in the kernel mode wakes up the user-mode interrupt processing thread based on the interrupt number corresponding to the user-mode IRQ, the CPU directly performs S807. The CPU does not need to recover context of the user-mode interrupt processing thread, and directly switches to the user mode from the kernel mode by using a first hardware switching instruction. The CPU can implement the context switch without recovery of the user-mode interrupt processing thread. This is because that S903 is performed in the interrupt initialization procedure after the CPU is started, that is, after the CPU in the kernel mode runs the second interrupt exception handler, a register, of the CPU, in which the handler is located does not have a kernel address or information that can be obtained by using the kernel address. The CPU directly switches to the user mode from the kernel mode. In S903, it can be ensured that no security problem is generated due to leakage of the kernel address when the CPU in the user mode runs the user-mode interrupt handler.

It should be noted that the CPU in the kernel mode may perform anonymization processing on the kernel address of the first interrupt exception handler in any one of the following manners.

As a possible implementation, the kernel address and the information that can be obtained by using the kernel address that are in the first interrupt exception handler are overwritten, for example, the second interrupt exception handler is obtained by modifying a compiler or handwriting assembly. In S803 and S806, after the CPU in the kernel mode runs the second interrupt exception handler, a register, of the CPU, in which the handler is located does not include a kernel address and information that can be obtained by using the kernel address. A manner of overwriting the kernel address and the information that can be obtained by using the kernel address that are in the first interrupt exception handler is not limited in this embodiment of this application.

As a possible implementation, the kernel address and the information that can be obtained by using the kernel address that are in the first interrupt exception handler are deleted, for example, the second interrupt exception handler is obtained by reusing the register or clearing. In S803 and S806, after the CPU in the kernel mode runs the second interrupt exception handler, a register, of the CPU, in which the handler is located does not include a kernel address and information that can be obtained by using the kernel address. A manner of deleting the kernel address and the information that can be obtained by using the kernel address that are in the first interrupt exception handler is not limited in this embodiment of this application.

Anonymization processing is performed on the kernel address of the first interrupt exception handler. Therefore, it can be ensured that no information that affects kernel security exists in the register of the CPU, and security of the CPU kernel is further ensured when the CPU in the user mode executes the user-mode interrupt handler after first privilege level switching without context recovery, thereby greatly reducing a delay in responding to the user-mode interrupt handler.

It should be understood that S901 to S903 are initialization operations performed in the kernel mode after the CPU is started, that is, S901 to S903 are pre-operations for subsequently responding to and processing the user-mode interrupt request. There is no sequence between S901 and S903. S901 may be performed before S903, or S903 may be performed before S901. This is not limited in this embodiment of this application.

S904: After the CPU is started, when the CPU is in the user mode, the user-mode driver or application 103 creates a user-mode interrupt processing thread corresponding to the user-mode IRQ, or creates an address of a user-mode interrupt handler corresponding to the user-mode IRQ.

It should be noted that, if there is only one thread or process in the user mode, the user-mode driver or application 103 may create an address of a user-mode interrupt handler corresponding to the user-mode IRQ.

S905: The CPU records, in a kernel through a kernel interface, a correspondence between the interrupt number of the user-mode IRQ and the user-mode interrupt processing thread, or records, in the kernel, an address of the user-mode interrupt handler corresponding to the interrupt number of the user-mode IRQ.

S906: Enable the user-mode IRQ in the GIC by using an interrupt set-enable register (ISENABLER).

In addition, the three steps S904, S905, and S906 are respectively steps that need to be performed by the CPU in the user mode, the CPU in the kernel mode, and the GIC, to implement registration of the user-mode IRQ. This process is a process in which the user-mode driver or application 103 registers the user-mode IRQ, and transfers related information of the user-mode IRQ to the kernel of the CPU and the GIC. This is to further perform subsequent steps after the CPU receives the user-mode IRQ (S802).

The following describes some steps in FIG. 8 in detail with reference to FIG. 10 to FIG. 12.

First, S803 is described in detail. After the CPU receives the user-mode IRQ, an interrupt exception occurs. If the CPU in the user mode executes a user-mode process A, the CPU traps to the kernel mode to execute a second interrupt exception handler.

In a possible implementation, after receiving the user-mode IRQ, the CPU jumps to run the second interrupt exception handler based on a corresponding address in a kernel exception vector table, as shown in FIG. 10. FIG. 10 is a schematic comparison diagram of a kernel exception vector table according to an embodiment of this application.

It should be noted that, when a kernel exception occurs in the CPU, in addition to that the CPU receives an interrupt request IRQ or a fast interrupt request FIQ, exceptions such as a synchronization exception or a system error may also occur. When these exceptions occur, the CPU may obtain, according to the kernel exception vector table, processing addresses corresponding to different exceptions, and then the CPU jumps to process the corresponding exceptions by using the obtained processing addresses. In this embodiment of this application, the user-mode IRQ is mainly used, and correspondingly, the CPU jumps to run the second interrupt exception handler.

Second, S807 and S810 are described in detail. In S807, the CPU in the kernel mode performs first privilege level switching by using a first hardware switching instruction, to implement switching to the user mode from the kernel mode, where the first privilege level switching is switching without context recovery.

In a possible implementation, the first hardware switching instruction may be eret/sysret.

S810: The CPU in the user mode may perform second privilege level switching by using a second hardware switching instruction, to switch to the kernel mode from the user mode, where the second privilege level switching is switching without context storage.

In a possible implementation, the second hardware switching instruction may be svc/syscall.

The following specifically describes switching procedures of S807 and S810 with reference to FIG. 11. FIG. 11 is a schematic diagram of a privilege level switching procedure according to an embodiment of this application.

Before the first privilege level switching is performed, the PC points to an address of the kernel mode, that is, the PC points to the last sentence of the second interrupt exception handler in S705. The SP points to a current kernel stack, and the SP points to a user stack according to the first hardware switching instruction eret/sysret. The PC points to an address of the user mode, to complete the first privilege level switching, so that a control flow jumps to the user mode to invoke the user-mode interrupt processing thread, the user-mode interrupt processing thread enters a running state from a ready state, and the CPU is enabled to execute the corresponding user-mode interrupt handler (S808) in the thread.

After the CPU in the user mode runs the user-mode interrupt handler, the PC points to the address of the user-mode, the SP points to the user stack, the SP points to the kernel stack according to the second hardware switching instruction svc/syscall, the PC points to the address of the kernel-mode, and the second privilege level switching is completed, so that the control flow returns to the kernel mode, and the user-mode IRQ ends (S811).

Finally, S809 is described in detail. In S809, when the CPU in the user mode executes the user-mode interrupt handler, the CPU in the kernel mode concurrently detects the result status of the user-mode interrupt handler.

After the CPU is started, the CPU in the kernel mode sets the preemption operation for the GIC (S902). In this case, although the CPU in the user mode executes the user-mode interrupt handler, the kernel-mode IRQ that belongs to the first interrupt priority group may interrupt execution of the user-mode interrupt handler corresponding to the user-mode IRQ. Therefore, when the CPU receives the kernel-mode IRQ, the CPU that is originally in the user mode traps to the kernel mode, and responds to and serves the kernel-mode IRQ. This process is that the CPU in the kernel mode concurrently detects the result status of the user-mode interrupt handler. It should be noted that the concurrent detection in this application is not performed simultaneously in time domain, but needs to preempt a running user-mode interrupt handler by the kernel-mode interrupt request, so that the CPU in the kernel mode concurrently detects the result status of the user-mode interrupt handler.

In a possible implementation, in this embodiment of this application, the CPU may use a clock interrupt request that belongs to the kernel-mode IRQ, so that the CPU in the kernel mode concurrently detects the result status of the user-mode interrupt handler.

For example, when the CPU in the user mode executes the user-mode interrupt handler corresponding to the user-mode IRQ, the CPU periodically receives the clock interrupt request. In this case, the CPU periodically traps to the kernel mode to detect whether the CPU has written the EOI to the register of the GIC, that is, the CPU detects whether S811 and S812 have been performed. The periodic clock interrupt request may be N clock cycles, where N is a positive integer.

If the CPU traps to the kernel mode and detects that there is no EOI for the user-mode IRQ in the IAR of the GIC, the result status of the user-mode interrupt handler indicates that the user-mode interrupt handler does not end. The CPU in the kernel mode disables the user-mode IRQ and writes the EOI to the register of the interrupt controller.

Then, the CPU receives another new user-mode IRQ according to the current user-mode interrupt processing procedure (FIG. 2). When the user-mode IRQ disabled by the CPU is recovered after a long time, the user-mode IRQ may be re-enabled. The user-mode IRQ is recovered in two manners after a long time. In a first manner, execution time of the user-mode interrupt handler corresponding to the user-mode IRQ is long. After the execution is completed, the user-mode interrupt handler switches back to the kernel mode through privilege level switching, and the CPU in the kernel mode re-enables the user-mode IRQ. In a second manner, after discovering that the user-mode interrupt handler corresponding to the user-mode IRQ is abnormal, the user-mode driver or application of the CPU in the user mode re-initializes the user-mode IRQ, and re-enables the user-mode IRQ.

In a possible implementation, in this embodiment of this application, the CPU in the kernel mode may concurrently detect the result status of the user-mode interrupt handler by using a method such as a performance monitor counter (PMC) or watchdog (watchdog) biting.

For example, when executing a user-mode interrupt handler corresponding to a user-mode IRQ, the CPU in the user mode detects, by using the PMC, whether the CPU in the user mode completes the user-mode interrupt handler in M instructions, where M is a positive integer.

If the PMC detects that the CPU in the user mode does not complete the user-mode interrupt handler in the M instructions, the result status of the user-mode interrupt handler indicates that the user-mode interrupt handler does not end. The CPU in the kernel mode disables the user-mode IRQ and writes the EOI to the register of the interrupt controller. Subsequent operations are consistent with the operations described above in detecting the result status of the user-mode interrupt handler by using the clock interrupt request. To avoid repetition, details are not described herein again.

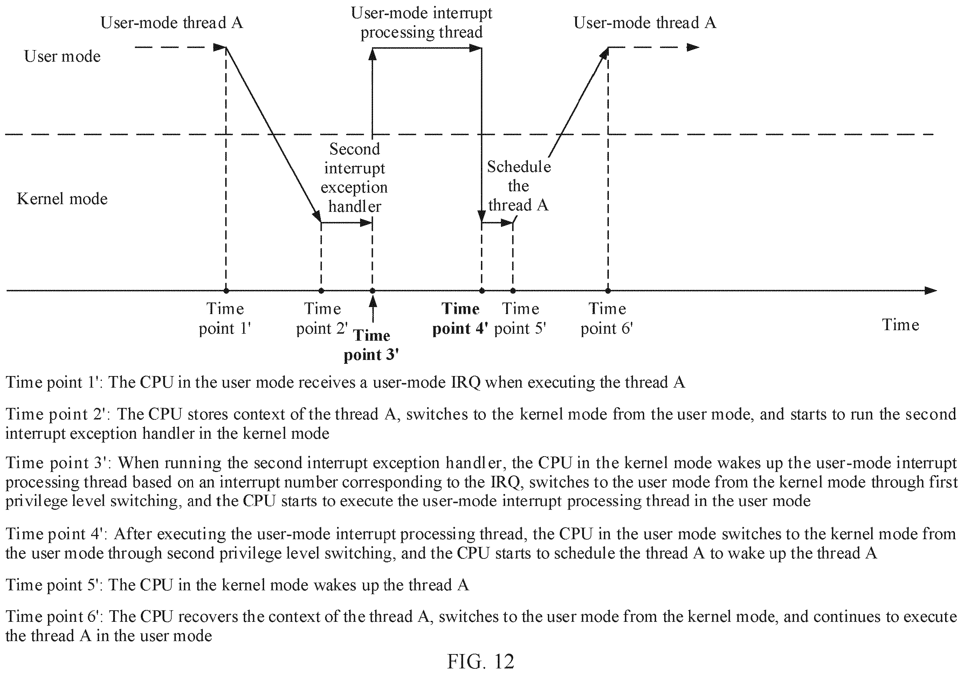

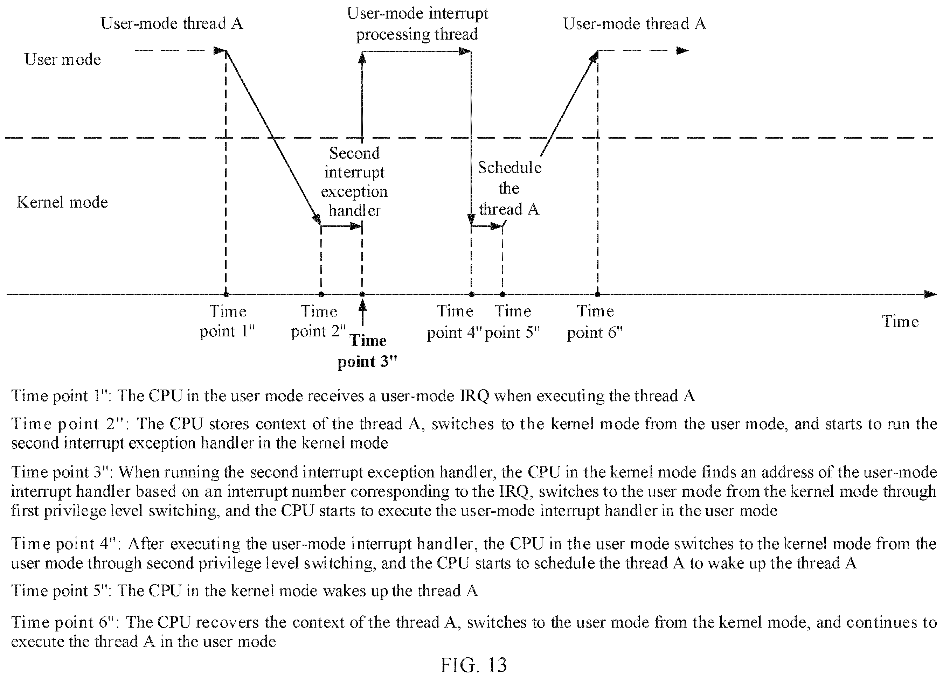

The foregoing description describes in detail the user-mode interrupt processing procedure in this embodiment of this application. The following describes, with reference to FIG. 12 and FIG. 13, how to reduce a delay and improve a response speed of the user-mode interrupt handler in the user-mode interrupt processing method in this embodiment of this application compared with the current user-mode interrupt processing procedure.

When the user-mode driver or application creates the user-mode interrupt processing thread, FIG. 12 is another schematic diagram of a user-mode interrupt processing procedure according to an embodiment of this application.

Before a CPU receives an IRQ, that is, before a time point 1', the CPU in the user mode executes a user-mode thread A. The CPU receives the user-mode IRQ at the time point 1'. In this case, the CPU traps to a kernel mode, so that the user-mode thread A enters a blocked state from a running state, that is, in a period of time from the time point 1' to a time point 2', the CPU needs to store context of the user-mode thread A, to implement switching to the kernel-mode from the user-mode.

Then, starting from the time point 2', the CPU in the kernel mode executes a second interrupt exception handler and wakes up a user-mode interrupt processing thread corresponding to the interrupt number obtained in S803 corresponding to S803, S804, and S806, so that the user-mode interrupt processing thread enters a ready state from the blocked state.

At a time point 3', the CPU switches to the user mode from the kernel mode through first privilege level switching, which corresponds to S807.

The first privilege level switching is switching without context recovery of the user-mode interrupt processing thread through the first privilege level switching, so that time for the CPU to switch to the user mode from the kernel mode to execute the user-mode interrupt processing thread can be reduced, so that the user-mode interrupt processing thread can be quickly responded to, and a delay is effectively reduced.

After the CPU switches to the user mode from the kernel mode, starting from the time point 3', the CPU in the user mode invokes the user-mode interrupt processing thread, and then starts to run the user-mode interrupt handler in the user-mode interrupt processing thread, which corresponds to S808.

At a time point 4', the CPU in the user mode completes execution of the user-mode interrupt processing thread, and switches to the kernel mode from the user mode through the second privilege level switching, which corresponds to S810. The CPU starts to schedule the user-mode thread A from the time point 4', to wake up the user-mode thread A.

The second privilege level switching is switching without context storage of the user-mode interrupt processing thread through the second privilege level switching, so that time of the CPU for switching to the kernel mode from the user mode can be reduced, and overall time for the CPU to serve the user-mode IRQ is effectively reduced.

At a time point 5', the CPU in the kernel mode wakes up the user mode thread A, so that the user mode thread A enters a ready state from the blocked state. In a time period from the time point 5' to a time point 6', the CPU needs to recover the context of the user-mode thread A, to switch to the user mode from the kernel mode. At the time point 6', the CPU in the user mode continues to execute the user-mode thread A.

When the user-mode driver or application 103 creates the address of the user-mode interrupt handler, FIG. 13 is yet another schematic diagram of a user-mode interrupt processing procedure according to an embodiment of this application.

A time period from a time point 2" to a time point 3" in FIG. 13 is shorter than the time period from the time point 2' to the time point 3' in FIG. 12. This is because, in this time period in FIG. 13, when the CPU in the kernel mode runs the second interrupt exception handler, the address of the user-mode interrupt handler corresponding to the user-mode IRQ may be directly obtained. After performing the first privilege level switching, the CPU in the kernel mode may directly start to run the user-mode interrupt handler, and does not need to invoke a user-mode interrupt processing thread.

Therefore, when the user-mode driver or application 103 creates the address of the user-mode interrupt handler, according to the user-mode interrupt processing method in this application, a response speed of the user-mode interrupt handler can be further improved, thereby reducing a delay of user-mode interrupt processing.

Compared with the procedure of the current user-mode interrupt processing method, after the CPU is started, anonymization processing is performed on the first interrupt exception handler, so that when the CPU switches to the user mode from the kernel mode to perform the user-mode interrupt handler, context recovery of the user-mode interrupt processing thread does not need to be performed, thereby improving a response speed of the user-mode interrupt handler.

Compared with the procedure of the current user-mode interrupt processing method, in this application, the interrupt priority group and the preemption operation are set for the interrupt controller after the CPU is started, so that in the solution of this application, two steps of disabling the user-mode interrupt request and re-enabling the user-mode interrupt request are reduced while effect of preventing the same user-mode interrupt request from being sent to the kernel mode to generate nesting is achieved, and a response speed of the user-mode interrupt request can be improved, thereby greatly reducing a processing delay of the user-mode interrupt request.

The solution in this embodiment of this application can greatly reduce the processing delay of the user-mode interrupt request. As shown in Table 1, Table 1 provides a comparison table between a current user-mode interrupt solution, a user-mode interrupt delay in a general scenario, and a single-thread/single-process scenario in the technical solution in this embodiment of this application.

**Table 1**

| User-mode interrupt | Delay (cycles) |
|---|---|
| Current user-mode interrupt solution | 6000 to 8000 |
| General scenario solution in this embodiment of this application | 2000 to 3000 |
| Single-thread/single-process scenario solution | 200 to 400 |
| in this embodiment of this application | |

It can be learned from Table 1 that, compared with the current user-mode interrupt processing solution, the user-mode interrupt processing solution in the general scenario in this embodiment of this application can achieve optimization effect of more than 60%. In the single-thread or single-process scenario, that is, when the user-mode driver or application 103 creates the storage address of the user-mode interrupt handler, the user-mode interrupt processing solution in this embodiment of this application can achieve delay optimization effect of 90% compared with the current user-mode interrupt processing solution.

The foregoing describes in detail the user-mode interrupt request processing method in embodiments of this application with reference to FIG. 7 to FIG. 13. The following describes in detail a user-mode interrupt request processing apparatus in an embodiment of this application with reference to FIG. 14.

FIG. 14 is a schematic diagram of a user-mode interrupt request processing apparatus 1400 according to an embodiment of this application. As shown in FIG. 14, the user-mode interrupt request processing apparatus 1400 includes a CPU. The CPU includes an initialization module 1401, an interrupt exception processing module 1402, a privilege level switching module 1403, a user-mode interrupt processing module 1404, a user-mode interrupt processing end module 1405, and a user-mode interrupt processing result detection module 1406.

The initialization module 1401 in a kernel mode is configured to perform anonymization processing on a kernel address of a first interrupt exception handler to obtain a second interrupt exception handler. The interrupt exception processing module 1402 in the kernel mode is configured to: obtain a user-mode interrupt request, and execute the second interrupt exception handler to determine a user-mode interrupt handler corresponding to the user-mode interrupt request. The privilege level switching module 1403 is configured to switch to a user mode from the kernel mode through first privilege level switching. The user-mode interrupt processing module 1404 in the user mode is configured to execute the user-mode interrupt handler, where the first privilege level switching is switching without context recovery. The privilege level switching module 1403 is configured to switch to the kernel mode from the user mode through second privilege level switching, where the second privilege level switching is switching without context storage.

It should be noted that the foregoing modules are logical division of functions, and are not limited to the foregoing modules being independent hardware units.

The initialization module 1401 is further configured to set an interrupt priority group and a preemption operation for the interrupt controller in the foregoing method embodiment. The user-mode interrupt processing end module 1405 in the kernel mode is configured to write an end of interrupt EOI to the register of the interrupt controller. The user-mode interrupt processing result detection module 1406 is configured to concurrently detect a result status of the user-mode interrupt handler in a process of the user-mode interrupt handler. For a detailed process, refer to the method embodiment. Details are not described herein again.

A connection relationship among the modules in FIG. 14 is only an example. A method provided in any embodiment of this application may also be applied to a terminal device using another connection manner. For example, all modules are connected by using a bus. Division into the modules in FIG. 14 is merely logical division, and does not indicate that the modules are necessarily separated in hardware. Not all the modules in FIG. 14 are necessary in another embodiment of this application.

In addition, this application further provides a storage medium, a computer program product, computer programs, and the like related to the solution provided in this application. For specific implementation, refer to the foregoing embodiment.

It should be noted that, for ease of application and understanding, some systems, modules, devices, elements, data structures, instructions, and the like that are mentioned are named in embodiments of this application. Uppercase and lowercase of these names have same meanings unless otherwise specified. In addition, these names may be changed as required, and should not constitute any limitation on the solution provided in this application.

It should be noted that, the solution provided in this embodiment may be applied to a terminal device, a server, or the like. The terminal device herein includes but is not limited to a smartphone, a vehicle-mounted apparatus (for example, an autonomous driving device), a personal computer, an artificial intelligence device, a tablet computer, a personal digital assistant, an intelligent wearable device (for example, a smart watch or band, or smart glasses), an intelligent voice device (for example, a smart speaker), a virtual reality/mixed reality/enhanced reality device or a network access device (for example, a gateway), or the like. The server may include a storage server, a computing server, or the like.

It should be noted that division into modules or units provided in the foregoing embodiments is merely an example, functions of the described modules are merely used as examples for description, and this application is not limited thereto. A person of ordinary skill in the art can converge functions of two or more modules thereof as required, or divide a function of one module to obtain more modules at a finer granularity and other variants.

Same or similar parts between embodiments described above may be cross-referenced. "A plurality of" in this application means two or more or "at least two" unless otherwise specified. "A/B" in this application includes three cases: "A", "B", and "A and B". In this application, an "identifier (id)" of an object refers to information that uniquely identifies the object. The "identifier" may directly identify the object, for example, a name of the object, or may indirectly indicate the object, for example, a storage address of the object. In this application, "first", "second", "third", and the like are merely used for distinguishing expressions, and are not intended to limit a sequence. In addition, a first object and a second object may be combined or refer to a same object in some cases. Further, because there is no limited sequence, there may be no first, and there may be second or third.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A user-mode interrupt request processing method, comprising:
performing, by a processor in a kernel mode, anonymization processing on a kernel address of a first interrupt exception handler to obtain a second interrupt exception handler;
obtaining, by the processor in the kernel mode, a user-mode interrupt request, and executing the second interrupt exception handler to determine a user-mode interrupt handler corresponding to the user-mode interrupt request;
switching, by the processor, to a user mode from the kernel mode through first privilege level switching, wherein the first privilege level switching is switching without context recovery;
wherein the first privilege level switching comprises configuring a stack pointer, SP, to point to a user stack, and configuring a program counter, PC, to point to an address of the user mode;
executing, by the processor in the user mode, the user-mode interrupt handler; and
switching, by the processor, to the kernel mode from the user mode through second privilege level switching, wherein the second privilege level switching is switching without context storage.

2. The method according to claim 1, wherein the performing, by a processor in a kernel mode, anonymization processing on a kernel address of a first interrupt exception handler comprises:
overwriting or deleting the kernel address and information in the kernel address in the first interrupt exception handler.

3. The method according to claim 1, wherein the executing the second interrupt exception handler to determine a user-mode interrupt handler corresponding to the user-mode interrupt request comprises:
waking up a user-mode interrupt processing thread corresponding to the user-mode interrupt request, wherein the user-mode interrupt processing thread comprises the user-mode interrupt handler; or
obtaining an address of the user-mode interrupt handler corresponding to the user-mode interrupt request.

4. The method according to claim 3, wherein the obtaining an address of the user-mode interrupt handler corresponding to the user-mode interrupt request comprises:
obtaining an interrupt number corresponding to the user-mode interrupt request; and
obtaining an address of the user-mode interrupt handler corresponding to the interrupt number.

5. The method according to claim 4, wherein the obtaining an interrupt number corresponding to the user-mode interrupt request comprises:
reading, by the processor in the kernel mode, a register of an interrupt controller to obtain the interrupt number corresponding to the user-mode interrupt request, wherein the interrupt controller obtains an acknowledgement message, and the acknowledgement message indicates the interrupt controller to mask an interrupt request whose priority is the same as that of the user-mode interrupt request, or mask an interrupt request whose priority is lower than that of the user-mode interrupt request.

6. The method according to any one of claims 1 to 5, wherein the method further comprises:
setting, by the processor in the kernel mode, an interrupt priority group for the interrupt controller, wherein the interrupt priority group comprises a first interrupt priority group and a second interrupt priority group, the first interrupt priority group comprises a kernel-mode interrupt request, the second interrupt priority group comprises the interrupt request whose priority is the same as that of the user-mode interrupt request or the interrupt request whose priority is lower than that of the user-mode interrupt request, and a priority of the first interrupt priority group is higher than that of the second interrupt priority group; and
setting, by the processor in the kernel mode, a preemption operation for the interrupt controller, wherein the preemption operation comprises that the first interrupt priority group preempts the second interrupt priority group.

7. The method according to any one of claims 1 to 6, wherein after the switching, by the processor, to the kernel mode from the user mode through second privilege level switching, the method further comprises:
writing, by the processor in the kernel mode, an end of interrupt, EOI, to the register of the interrupt controller, wherein the interrupt controller receives the EOI, and the EOI indicates the interrupt controller to unmask the interrupt request whose priority is the same as that of the user-mode interrupt request, or mask the interrupt request whose priority is lower than that of the user-mode interrupt request.

8. The method according to any one of claims 1 to 7, wherein the method further comprises:
when the processor in the user mode executes the user-mode interrupt handler, concurrently detecting, by the processor in the kernel mode, a result status of the user-mode interrupt handler.

9. The method according to claim 8, wherein the method further comprises:
if the result status of the user-mode interrupt handler indicates that the user-mode interrupt handler does not end, disabling, by the processor in the kernel mode, the user-mode interrupt request, and writing the end of interrupt EOI to the register of the interrupt controller.

10. A user-mode interrupt request processing apparatus, wherein the processing apparatus comprises an initialization module, an interrupt exception processing module, a privilege level switching module, and a user-mode interrupt processing module;
the initialization module in a kernel mode is configured to perform anonymization processing on a kernel address of a first interrupt exception handler to obtain a second interrupt exception handler;
the interrupt exception processing module in the kernel mode is configured to: obtain a user-mode interrupt request, and execute the second interrupt exception handler to determine a user-mode interrupt handler corresponding to the user-mode interrupt request;
the privilege level switching module is configured to switch to a user mode from the kernel mode through first privilege level switching, wherein the first privilege level switching comprises configuring a stack pointer, SP, to point to a user stack, and configuring a program counter, PC, to point to an address of the user mode;
the user-mode interrupt processing module in the user mode is configured to execute the user-mode interrupt handler, wherein the first privilege level switching is switching without context recovery; and
the privilege level switching module is configured to switch to the kernel mode from the user mode through second privilege level switching, wherein the second privilege level switching is switching without context storage.

11. The apparatus according to claim 10, wherein that the initialization module in the kernel mode is configured to perform anonymization processing on a kernel address of a first interrupt exception handler comprises:
overwriting or deleting the kernel address and information in the kernel address in the interrupt exception handler.

12. The apparatus according to claim 10, wherein the executing the second interrupt exception handler to determine a user-mode interrupt handler corresponding to the user-mode interrupt request comprises:
the interrupt exception processing module is configured to wake up a user-mode interrupt processing thread corresponding to the user-mode interrupt request, wherein the user-mode interrupt processing thread comprises the user-mode interrupt handler; or
the interrupt exception processing module is configured to obtain an address of the user-mode interrupt handler corresponding to the user-mode interrupt request.

13. A user-mode interrupt request processing apparatus, wherein the processing apparatus comprises a processor and a memory, the memory is configured to store computer-readable instructions, and the processor is configured to read the computer-readable instructions to implement the method according to any one of claims 1 to 9.

14. A computer-readable storage medium, wherein the computer-readable storage medium stores computer instructions, and when the computer instructions are run on a computer, the method according to any one of claims 1 to 9 is performed.

15. A computer program product, wherein the computer program product comprises computer program code, and when the computer program code is run on a computer, the method according to any one of claims 1 to 9 is performed.

## Patentansprüche

1. Verfahren zum Verarbeiten einer Benutzermodusunterbrechungsanforderung, das umfasst:
Durchführen, durch einen Prozessor in einem Kernel-Modus, eines Anonymisierungsverarbeitens an einer Kernel-Adresse eines ersten Unterbrechungs-Ausnahme-"Handlers" zum Erhalten eines zweiten Unterbrechungs-Ausnahme-"Handlers";
Erhalten, durch den Prozessor im Kernel-Modus, einer Benutzermodusunterbrechungsanforderung und Ausführen des zweiten Unterbrechungs-Ausnahme-"Handlers" zum Bestimmen eines Benutzermodusunterbrechungs-"Handlers" entsprechend der Benutzermodusunterbrechungsanforderung;
Umschalten, durch den Prozessor, zu einem Benutzermodus vom Kernel-Modus durch ein erstes Berechtigungsebenenumschalten, wobei das erste Berechtigungsebenenumschalten ein Umschalten ohne Kontextwiederherstellung ist;
wobei das erste Berechtigungsebenenumschalten ein Konfigurieren eines Stapelzeigers, SP, zum Zeigen auf einen Benutzerstapel und Konfigurieren eines Programmzählers, PC, zum Zeigen auf eine Adresse des Benutzermodus umfasst;
Ausführen, durch den Prozessor im Benutzermodus, des Benutzermodusunterbrechungs-"Handlers" und
Umschalten, durch den Prozessor, zum Kernel-Modus vom Benutzermodus durch ein zweites Berechtigungsebenenumschalten, wobei das zweite Berechtigungsebenenumschalten ein Umschalten ohne Kontextspeicherung ist.

2. Verfahren nach Anspruch 1, wobei das Durchführen, durch einen Prozessor in einem Kernel-Modus, eines Anonymisierungsverarbeitens an einer Kernel-Adresse eines ersten Unterbrechungs-Ausnahme-"Handlers" umfasst:
Überschreiben oder Löschen der Kernel-Adresse und von Informationen in der Kernel-Adresse im ersten Unterbrechungs-Ausnahme-"Handler".

3. Verfahren nach Anspruch 1, wobei das Ausführen des zweiten Unterbrechungs-Ausnahme-"Handlers" zum Bestimmen eines Benutzermodusunterbrechungs-"Handlers" entsprechend der Benutzermodusunterbrechungsanforderung umfasst:
Reaktivieren eines Benutzermodusunterbrechungsverarbeitungs-"Threads" entsprechend der Benutzermodusunterbrechungsanforderung, wobei der Benutzermodusunterbrechungsverarbeitungs-"Thread" den Benutzermodusunterbrechungs-"Handler" umfasst; oder
Erhalten einer Adresse des Benutzermodusunterbrechungs-"Handlers" entsprechend der Benutzermodusunterbrechungsanforderung.

4. Verfahren nach Anspruch 3, wobei das Erhalten einer Adresse des Benutzermodusunterbrechungs-"Handlers" entsprechend der Benutzermodusunterbrechungsanforderung umfasst:
Erhalten einer Unterbrechungsanzahl entsprechend der Benutzermodusunterbrechungsanforderung und
Erhalten einer Adresse des Benutzermodusunterbrechungs-"Handlers" entsprechend der Unterbrechungsanzahl.

5. Verfahren nach Anspruch 4, wobei das Erhalten einer Unterbrechungsanzahl entsprechend der Benutzermodusunterbrechungsanforderung umfasst:
Lesen, durch den Prozessor im Kernel-Modus, eines Registers einer Unterbrechungssteuerung zum Erhalten der Unterbrechungsanzahl entsprechend der Benutzermodusunterbrechungsanforderung, wobei die Unterbrechungssteuerung eine Bestätigungsnachricht erhält und die Bestätigungsnachricht der Unterbrechungssteuerung ein Maskieren einer Unterbrechungsanforderung, deren Priorität die gleiche wie die der Benutzermodusunterbrechungsanforderung ist, oder Maskieren einer Unterbrechungsanforderung, deren Priorität kleiner als die der Benutzermodusunterbrechungsanforderung ist, angibt.

6. Verfahren nach einem der Ansprüche 1 bis 5, wobei das Verfahren ferner umfasst:
Festlegen, durch den Prozessor im Kernel-Modus, einer Unterbrechungsprioritätsgruppe für die Unterbrechungssteuerung, wobei die Unterbrechungsprioritätsgruppe eine erste Unterbrechungsprioritätsgruppe und eine zweite Unterbrechungsprioritätsgruppe umfasst, die erste Unterbrechungsprioritätsgruppe eine Kernel-Modus-Unterbrechungsanforderung umfasst, die zweite Unterbrechungsprioritätsgruppe die Unterbrechungsanforderung, deren Priorität die gleiche wie die der Benutzermodusunterbrechungsanforderung ist, oder die Unterbrechungsanforderung, deren Priorität kleiner als die der Benutzermodusunterbrechungsanforderung ist, umfasst und eine Priorität der ersten Unterbrechungsprioritätsgruppe größer als die der zweiten Unterbrechungsprioritätsgruppe ist; und
Festlegen, durch den Prozessor im Kernel-Modus, eines Präemptionsvorgangs für die Unterbrechungssteuerung, wobei der Präemptionsvorgang umfasst, dass die erste Unterbrechungsprioritätsgruppe die zweite Unterbrechungsprioritätsgruppe präemptiv unterbricht.

7. Verfahren nach einem der Ansprüche 1 bis 6, wobei nach dem Umschalten, durch den Prozessor, zum Kernel-Modus vom Benutzermodus durch ein zweites Berechtigungsebenenumschalten das Verfahren ferner umfasst:
Schreiben, durch den Prozessor im Kernel-Modus, eines Unterbrechungsendes, EOI, in das Register der Unterbrechungssteuerung, wobei die Unterbrechungssteuerung das EOI empfängt und das EOI der Unterbrechungssteuerung ein Demaskieren der Unterbrechungsanforderung, deren Priorität die gleiche wie die der Benutzermodusunterbrechungsanforderung ist, oder Maskieren der Unterbrechungsanforderung, deren Priorität kleiner als die der Benutzermodusunterbrechungsanforderung ist, angibt.

8. Verfahren nach einem der Ansprüche 1 bis 7, wobei das Verfahren ferner umfasst:
wenn der Prozessor im Benutzermodus den Benutzermodusunterbrechungs-"Handler" ausführt, gleichzeitiges Detektieren, durch den Prozessor im Kernel-Modus, eines Ergebnisstatus des Benutzermodusunterbrechungs-"Handlers".

9. Verfahren nach Anspruch 8, wobei das Verfahren ferner umfasst:
wenn der Ergebnisstatus des Benutzermodusunterbrechungs-"Handlers" angibt, dass der Benutzermodusunterbrechungs-"Handler" nicht endet, Deaktivieren, durch den Prozessor im Kernel-Modus, der Benutzermodusunterbrechungsanforderung und Schreiben des Unterbrechungsendes, EOI, in das Register der Unterbrechungssteuerung.

10. Vorrichtung zum Verarbeiten einer Benutzermodusunterbrechungsanforderung, wobei die Verarbeitungsvorrichtung ein Initialisierungsmodul, ein Unterbrechungsausnahmeverarbeitungsmodul, ein Berechtigungsebenenumschaltmodul und ein Benutzermodusunterbrechungsverarbeitungsmodul umfasst;
wobei das Initialisierungsmodul in einem Kernel-Modus ausgelegt ist zum Durchführen eines Anonymisierungsverarbeitens an einer Kernel-Adresse eines ersten Unterbrechungs-Ausnahme-"Handlers" zum Erhalten eines zweiten Unterbrechungs-Ausnahme-"Handlers";
wobei das Unterbrechungsausnahmeverarbeitungsmodul im Kernel-Modus ausgelegt ist zum: Erhalten einer Benutzermodusunterbrechungsanforderung und Ausführen des zweiten Unterbrechungs-Ausnahme-"Handlers" zum Bestimmen eines Benutzermodusunterbrechungs-"Handlers" entsprechend der Benutzermodusunterbrechungsanforderung;
wobei das Berechtigungsebenenumschaltmodul ausgelegt ist zum Umschalten zu einem Benutzermodus vom Kernel-Modus durch ein erstes Berechtigungsebenenumschalten, wobei das erste Berechtigungsebenenumschalten ein Konfigurieren eines Stapelzeigers, SP, zum Zeigen auf einen Benutzerstapel und Konfigurieren eines Programmzählers, PC, zum Zeigen auf eine Adresse des Benutzermodus umfasst;
wobei das Benutzermodusunterbrechungsverarbeitungsmodul im Benutzermodus ausgelegt ist zum Ausführen des Benutzermodusunterbrechungs-"Handlers", wobei das erste Berechtigungsebenenumschalten ein Umschalten ohne Kontextwiederherstellung ist; und
wobei das Berechtigungsebenenumschaltmodul ausgelegt ist zum Umschalten zum Kernel-Modus vom Benutzermodus durch ein zweites Berechtigungsebenenumschalten, wobei das zweite Berechtigungsebenenumschalten ein Umschalten ohne Kontextspeicherung ist.

11. Vorrichtung nach Anspruch 10, wobei der Umstand, dass das Initialisierungsmodul im Kernel-Modus ausgelegt ist zum Durchführen eines Anonymisierungsverarbeitens an einer Kernel-Adresse eines ersten Unterbrechungs-Ausnahme-"Handlers", umfasst:
Überschreiben oder Löschen der Kernel-Adresse und von Informationen in der Kernel-Adresse im Unterbrechungs-Ausnahme-"Handler".

12. Vorrichtung nach Anspruch 10, wobei das Ausführen des zweiten Unterbrechungs-Ausnahme-"Handlers" zum Bestimmen eines Benutzermodusunterbrechungs-"Handlers" entsprechend der Benutzermodusunterbrechungsanforderung umfasst:
dass das Unterbrechungsausnahmeverarbeitungsmodul ausgelegt ist zum Reaktivieren eines Benutzermodusunterbrechungsverarbeitungs-"Threads" entsprechend der Benutzermodusunterbrechungsanforderung, wobei der Benutzermodusunterbrechungsverarbeitungs-"Thread" den Benutzermodusunterbrechungs-"Handler" umfasst; oder
dass das Unterbrechungsausnahmeverarbeitungsmodul ausgelegt ist zum Erhalten einer Adresse des Benutzermodusunterbrechungs-"Handlers" entsprechend der Benutzermodusunterbrechungsanforderung.

13. Vorrichtung zum Verarbeiten einer Benutzermodusunterbrechungsanforderung, wobei die Verarbeitungsvorrichtung einen Prozessor und einen Speicher umfasst, der Speicher ausgelegt ist zum Speichern computerlesbarer Anweisungen und der Prozessor ausgelegt ist zum Lesen der computerlesbaren Anweisungen zum Implementieren des Verfahrens nach einem der Ansprüche 1 bis 9.

14. Computerlesbares Speicherungsmedium, wobei das computerlesbare Speicherungsmedium Computeranweisungen speichert, und wenn die Computeranweisungen auf einem Computer ausgeführt werden, das Verfahren nach einem der Ansprüche 1 bis 9 durchgeführt wird.

15. Computerprogrammprodukt, wobei das Computerprogrammprodukt Computerprogrammcode umfasst, und wenn der Computerprogrammcode auf einem Computer ausgeführt wird, das Verfahren nach einem der Ansprüche 1 bis 9 durchgeführt wird.

## Revendications

1. Procédé de traitement de demande d'interruption en mode utilisateur, comprenant :
l'exécution, par un processeur en mode noyau, d'un traitement d'anonymisation sur une adresse de noyau d'un premier gestionnaire d'exception d'interruption pour obtenir un second gestionnaire d'exception d'interruption ;
l'obtention, par le processeur en mode noyau, d'une demande d'interruption en mode utilisateur, et l'exécution du second gestionnaire d'exception d'interruption pour déterminer un gestionnaire d'interruption en mode utilisateur correspondant à la demande d'interruption en mode utilisateur ;
la commutation, par le processeur, en mode utilisateur à partir du mode noyau par l'intermédiaire d'une première commutation de niveau de privilège, dans lequel la première commutation de niveau de privilège est une commutation sans récupération de contexte ;
dans lequel la première commutation de niveau de privilège comprend la configuration d'un pointeur de pile, SP, pour pointer vers une pile d'utilisateur, et la configuration d'un compteur de programme, PC, pour pointer vers une adresse du mode utilisateur ;
l'exécution, par le processeur en mode utilisateur, du gestionnaire d'interruption en mode utilisateur ; et
la commutation, par le processeur, en mode noyau à partir du mode utilisateur par l'intermédiaire d'une seconde commutation de niveau de privilège, dans lequel la seconde commutation de niveau de privilège est une commutation sans stockage de contexte.

2. Procédé selon la revendication 1, dans lequel l'exécution, par un processeur en mode noyau, d'un traitement d'anonymisation sur une adresse de noyau d'un premier gestionnaire d'exception d'interruption comprend :
l'écrasement ou la suppression de l'adresse de noyau et d'informations dans l'adresse de noyau dans le premier gestionnaire d'exception d'interruption.

3. Procédé selon la revendication 1, dans lequel l'exécution du second gestionnaire d'exception d'interruption pour déterminer un gestionnaire d'interruption en mode utilisateur correspondant à la demande d'interruption en mode utilisateur comprend :
le réveil d'un fil de traitement d'interruption en mode utilisateur correspondant à la demande d'interruption en mode utilisateur, dans lequel le fil de traitement d'interruption en mode utilisateur comprend le gestionnaire d'interruption en mode utilisateur ; ou
l'obtention d'une adresse du gestionnaire d'interruption en mode utilisateur correspondant à la demande d'interruption en mode utilisateur.

4. Procédé selon la revendication 3, dans lequel l'obtention d'une adresse du gestionnaire d'interruption en mode utilisateur correspondant à la demande d'interruption en mode utilisateur comprend :
l'obtention d'un numéro d'interruption correspondant à la demande d'interruption en mode utilisateur ; et
l'obtention d'une adresse du gestionnaire d'interruption en mode utilisateur correspondant au numéro d'interruption.

5. Procédé selon la revendication 4, dans lequel l'obtention d'un numéro d'interruption correspondant à la demande d'interruption en mode utilisateur comprend :
la lecture, par le processeur en mode noyau, d'un registre d'un contrôleur d'interruption pour obtenir le numéro d'interruption correspondant à la demande d'interruption en mode utilisateur, dans lequel le contrôleur d'interruption obtient un message d'accusé de réception, et le message d'accusé de réception indique au contrôleur d'interruption de masquer une demande d'interruption dont la priorité est identique à celle de la demande d'interruption en mode utilisateur, ou de masquer une demande d'interruption dont la priorité est inférieure à celle de la demande d'interruption en mode utilisateur.

6. Procédé selon l'une quelconque des revendications 1 à 5, dans lequel le procédé comprend en outre :
la définition, par le processeur en mode noyau, d'un groupe de priorités d'interruption pour le contrôleur d'interruption, dans lequel le groupe de priorités d'interruption comprend un premier groupe de priorités d'interruption et un second groupe de priorités d'interruption, le premier groupe de priorités d'interruption comprend une demande d'interruption en mode noyau, le second groupe de priorités d'interruption comprend la demande d'interruption dont la priorité est identique à celle de la demande d'interruption en mode utilisateur ou la demande d'interruption dont la priorité est inférieure à celle de la demande d'interruption en mode utilisateur, et une priorité du premier groupe de priorités d'interruption est supérieure à celle du second groupe de priorités d'interruption ; et
la définition, par le processeur en mode noyau, d'une opération de préemption pour le contrôleur d'interruption, dans lequel l'opération de préemption consiste en ce que le premier groupe de priorités d'interruption préempte le second groupe de priorités d'interruption.

7. Procédé selon l'une quelconque des revendications 1 à 6, dans lequel après la commutation, par le processeur, en mode noyau à partir du mode utilisateur par l'intermédiaire de la seconde commutation de niveau de privilège, le procédé comprend en outre :
l'écriture, par le processeur en mode noyau, d'une fin d'interruption, EOI, dans le registre du contrôleur d'interruption, dans lequel le contrôleur d'interruption reçoit l'EOI, et l'EOI indique au contrôleur d'interruption de démasquer la demande d'interruption dont la priorité est identique à celle de la demande d'interruption en mode utilisateur, ou de masquer la demande d'interruption dont la priorité est inférieure à celle de la demande d'interruption en mode utilisateur.

8. Procédé selon l'une quelconque des revendications 1 à 7, dans lequel le procédé comprend en outre :
lorsque le processeur en mode utilisateur exécute le gestionnaire d'interruption en mode utilisateur, la détection simultanée, par le processeur en mode noyau, d'un statut de résultat du gestionnaire d'interruption en mode utilisateur.

9. Procédé selon la revendication 8, dans lequel le procédé comprend en outre :
si le statut de résultat du gestionnaire d'interruption en mode utilisateur indique que le gestionnaire d'interruption en mode utilisateur ne se termine pas, la désactivation, par le processeur en mode noyau, de la demande d'interruption en mode utilisateur, et l'écriture de la fin de l'EOI d'interruption dans le registre du contrôleur d'interruption.

10. Appareil de traitement de demande d'interruption en mode utilisateur, dans lequel l'appareil de traitement comprend un module d'initialisation, un module de traitement d'exception d'interruption, un module de commutation de niveau de privilège, et un module de traitement d'interruption en mode utilisateur ;
le module d'initialisation en mode noyau est configuré pour exécuter un traitement d'anonymisation sur une adresse de noyau d'un premier gestionnaire d'exception d'interruption pour obtenir un second gestionnaire d'exception d'interruption ;
le module de traitement d'exception d'interruption en mode noyau est configuré pour : obtenir une demande d'interruption en mode utilisateur, et exécuter le second gestionnaire d'exception d'interruption pour déterminer un gestionnaire d'interruption en mode utilisateur correspondant à la demande d'interruption en mode utilisateur ;
le module de commutation de niveau de privilège est configuré pour commuter en mode utilisateur à partir du mode noyau par l'intermédiaire d'une première commutation de niveau de privilège, dans lequel la première commutation de niveau de privilège comprend la configuration d'un pointeur de pile, SP, pour pointer vers une pile d'utilisateur, et la configuration d'un compteur de programme, PC, pour pointer vers une adresse du mode utilisateur ;
le module de traitement d'interruption en mode utilisateur dans le mode utilisateur est configuré pour exécuter le gestionnaire d'interruption en mode utilisateur, dans lequel la première commutation de niveau de privilège est une commutation sans récupération de contexte ; et
le module de commutation de niveau de privilège est configuré pour commuter en mode noyau à partir du mode utilisateur par l'intermédiaire d'une seconde commutation de niveau de privilège, dans lequel la seconde commutation de niveau de privilège est une commutation sans stockage de contexte.

11. Appareil selon la revendication 10, dans lequel la configuration du module d'initialisation en mode noyau pour exécuter un traitement d'anonymisation sur une adresse de noyau d'un premier gestionnaire d'exception d'interruption comprend :
l'écrasement ou la suppression de l'adresse de noyau et d'informations dans l'adresse de noyau dans le gestionnaire d'exception d'interruption.

12. Appareil selon la revendication 10, dans lequel l'exécution du second gestionnaire d'exception d'interruption pour déterminer un gestionnaire d'interruption en mode utilisateur correspondant à la demande d'interruption en mode utilisateur consiste en ce que :
le module de traitement d'exception d'interruption est configuré pour réveiller un fil de traitement d'interruption en mode utilisateur correspondant à la demande d'interruption en mode utilisateur, dans lequel le fil de traitement d'interruption en mode utilisateur comprend le gestionnaire d'interruption en mode utilisateur ; ou
le module de traitement d'exception d'interruption est configuré pour obtenir une adresse du gestionnaire d'interruption en mode utilisateur correspondant à la demande d'interruption en mode utilisateur.

13. Appareil de traitement de demande d'interruption en mode utilisateur, dans lequel l'appareil de traitement comprend un processeur et une mémoire, la mémoire est configurée pour stocker des instructions lisibles par ordinateur, et le processeur est configuré pour lire les instructions lisibles par ordinateur pour mettre en œuvre le procédé selon l'une quelconque des revendications 1 à 9.

14. Support de stockage lisible par ordinateur, dans lequel le support de stockage lisible par ordinateur stocke des instructions informatiques, et lorsque les instructions informatiques sont exécutées sur un ordinateur, le procédé selon l'une quelconque des revendications 1 à 9 est exécuté.

15. Produit de programme informatique, dans lequel le produit de programme informatique comprend un code de programme informatique, et lorsque le code de programme informatique est exécuté sur un ordinateur, le procédé selon l'une quelconque des revendications 1 à 9 est exécuté.
